# EUROPEAN PATENT APPLICATION

(11) **EP 4 245 915 A1**
(43) Date of publication of application: **20.09.2023**
(21) Application number: 23161712.7
(22) Date of filing: 14.03.2023
(51) Int. Cl.: D21H 19/20, D21H 19/22, D21H 19/28, D21H 19/82, D21H 19/84, D21H 27/10, D21H 27/30

(54) **METHOD FOR MANUFACTURING A BARRIER-COATED CELLULOSE-BASED SUBSTRATE, LAMINATED PACKAGING MATERIAL AND PACKAGING CONTAINER COMPRISING THE CELLULOSE-BASED SUBSTRATE THUS MANUFACTURED**

(30) Priority: 14.03.2022 EP 22161948
(71) Applicant: Tetra Laval Holdings & Finance S.A., 1009 Pully (CH)
(72) Inventor: BERLIN, Mikael, 221 86 Lund (SE); ÖHMAN, Peter, 221 86 Lund (SE); DAHLQVIST, John, 221 86 Lund (SE)
(74) Representative: Tetra Pak - Patent Attorneys SE

(57) **Abstract**

The present invention relates to an industrially feasible and optimised method for manufacturing a high-quality gas barrier-coated cellulose-based substrate (10a; 10b; 25a; 25b; 25c). The invention further relates to a laminated packaging material (20a; 20b; 20c) comprising the obtained barrier-coated celluose-based substrate (10a; 10b), suitable for packaging of oxygen-sensitive products, and to packaging containers comprising the laminated packaging material.

## Description

### Technical field

The present invention relates to an industrial method for manufacturing barrier-coated paper or cellulose-based substrates for packaging of oxygen - sensitive products, such as food products. The invention further relates to a laminated packaging material comprising a thus manufactured barrier-coated paper or cellulose-based substrate, for packaging of oxygen sensitives products, such as food products, such as liquid or semi-liquid food, and to a packaging container comprising the laminated packaging material.

### Background of the invention

Packaging containers of the single use disposable type for liquid foods are often produced from a packaging laminate based on paperboard or carton. One such commonly occurring packaging container is marketed under the trademark Tetra Brik Aseptic^{®} and is principally employed for aseptic packaging of liquid foods such as milk, fruit juices etc, sold for long term ambient storage. The packaging material in this known packaging container is typically a laminate comprising a bulk or core layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. Also on the outside of the bulk layer, there is an outermost heat sealable polymer layer.

The packaging containers are generally produced by means of modern, high-speed packaging machines of the type that form, fill and seal packages from a web or from prefabricated blanks of packaging material. Packaging containers may thus be produced by reforming a web of the laminated packaging material into a tube by both of the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedal, by fold formation along prepared crease lines in the packaging material. Each package may be equipped with an opening device, such as a screw cork, before of after filling, forming and sealing of the container.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced from bacteria and the filled packaging container is produced under clean conditions such that the filled package may be stored for a long time even at ambient temperature, without the risk of growth of micro-organisms in the filled product. Another important advantage of the Tetra Brik^{®} -type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

A layer of an aluminium foil in the packaging laminate provides gas barrier properties quite superior to most other gas barrier materials. The conventional aluminium-foil based packaging laminate for liquid food aseptic packaging has inherent barrier properties also to water vapour, to light, to aroma, flavour and acidic substances, and is still the most cost-efficient packaging material, at its level of performance, available on the market today. Moreover, the aluminium foil enables heat sealing and heating of the laminated material by means of induction in the aluminium foil.

Any other material to compete with the foil-based materials must be cost-efficient regarding raw materials, have comparable food preserving properties and have a comparably low complexity in the converting of materials into a finished packaging laminate.

Among the efforts of developing non-aluminium-foil materials for liquid food carton packaging, there is an incentive towards developing pre-manufactured films or sheets having high and multiple barrier functionalities, which may replace the aluminium-foil barrier material in the conventional laminated packaging material or, be combined with other barrier layers in the laminated material and adapt them to conventional processes for lamination and manufacturing.

Preferred types of such alternative, more environmentally sustainable barrier materials are barrier-coated paper substrates made by aqueous dispersion coating or vapour deposition coating onto thin paper carrier substrates. There are various aqueous dispersion coating processes and vapour deposition coating processes and material recipes for such coatings, but there is a need for cost-efficient barrier materials of this "non-foil" type, i.e. non-aluminium-foil, having improved properties for use in packaging laminates for liquid food packaging, regarding barrier properties, in particular towards gases, such as oxygen gas.

An earlier patent publication WO2011/003565A1 discloses a non-aluminium-foil packaging material comprising a pre-coated and metallised Kraft paper substrate for the purpose of induction heat sealing. It recommends rather thick coating layers and to include additional nano-clay particles in the pre-coating, and for good gas barrier properties there should also be applied further barrier coating layers in the packaging laminate, such as onto the back side of the paper substrate or onto the bulk paperboard layer.

The earlier patent publication WO2017/089508A1 discloses how further improved barrier properties may be obtained from a metallised paper in a similar packaging laminate, by selecting a paper substrate providing optimal properties. Such a metallised paper substrate provided not only improved barrier properties, but also indicated better stability of the metallised layer for induction heat sealing purposes.

There remains, however, a need for a robust and industrially viable coating method, i.e. running at high coating line speed, to provide optimal and reliable oxygen gas barrier properties on a selected, optimal range of paper and cellulose-based substrates. There remains generally also a need for improvements regarding recyclability and sustainability of the materials used, aiming to reduce the amounts of materials and the number of different types of materials used.

### Disclosure of the invention

It is, accordingly, a general object of the present invention to provide an industrially viable method for high-speed, robust manufacturing of barrier-coated paper or cellulose-based substrates, suitable as gas barrier material in packaging of oxygen-sensitive products, such as food products, such as in particular liquid or semi-liquid or wet food products, and for use in future sustainable, non-aluminium-foil based ("non-foil") laminated packaging materials manufactured for packaging of oxygen-sensitive products.

It is also a general object of the invention to provide an industrially viable method for high-speed, robust manufacturing of barrier-coated paper or cellulose-based substrates having good gas barrier properties as well as improved recyclability and sustainability characteristics, i.e.fulfil the needs of future sustainable, packaging materials for packaging of oxygen-sensitive products.

A more specific object is to provide an industrially viable and robust method for manufacturing of barrier-coated paper or cellulose-based substrates, suitable for use in non-foil laminated packaging materials and packaging containers for liquid, semi-liquid or viscous food products, to enable long-term aseptic storage under ambient conditions.

A further object is to provide a relative to aluminium foil barrier materials, cost-efficient, and reliable paper- or paperboard-based, laminated packaging material, having good gas barrier, and optionally water vapour barrier properties, being readily recyclable and environmentally sustainable, for the purpose of wrapping or packaging of oxygen-sensitive products such as food.

Yet a further object of the invention is to provide a cost-efficient, non-foil, paper- or paperboard-based, heat-sealable packaging laminate having reliable gas and water vapour barrier properties, for the purpose of manufacturing aseptic packaging containers for long-term storage of liquid, semi-liquid or viscous food, at maintained nutritional quality under ambient conditions.

These objects are thus attainable according to the present invention by the method for manufacturing of a barrier-coated paper or cellulose-based substrate, the laminated packaging material and the packaging container, as defined in the appended claims.

### Summary of the

### invention

According to a first aspect of the invention, a method is provided for manufacturing of a barrier-coated cellulose-based substrate for packaging of oxygen sensitive products is provided, the method comprising the steps of forwarding a web of a paper- or cellulose-based substrate at a line speed of 300 m/min or higher,
the web of the cellulose-based substrate being selected to have a grammage from 30 to 70 g/m², as measured according to ISO 536:2012, and a density from 800 kg/m³ to 1400 kg/m³, as measured according to ISO 534:2011, the surface of the top side of the paper- or cellulose-based substrate exhibiting a Bendtsen roughness value lower than 130 ml/min, as measured according to ISO 8791:4, and a Cobb 60 below 30 g/m² or lower, as measured according to ISO 535,
providing an aqueous solution of a gas barrier polymer selected from vinyl alcohol polymers, PVOH, ethylene vinyl alcohol copolymers, EVOH, and modified such PVOH and EVOH polymers, having a solid content from 5 to 15 weight-%, and a viscosity from 10 to 120 mPa*s, applying the aqueous solution of the gas barrier polymer onto the surface of the top side of the web of the paper- or cellulose-based substrate by means of a roll coating method to provide an even coating at an amount from 0.5 to 2 g/m2, dry weight, drying the applied aqueous gas barrier polymer coating from the previous step while the temperature of the surface of the web substrate is consistently kept from 60 °C to below 95 °C, repeating the steps of applying the aqueous solution of the gas barrier polymer and subsequently drying the applied aqueous gas barrier polymer coating at least once, optionally further coating the thus obtained, coated and dried web substrate, with a nanometer-thick barrier deposition coating of metal and/ or metal oxide, by means of physical vapour deposition, thus obtaining a barrier-coated paper- or cellulose-based substrate having a minimum of defects in the gas barrier coatings as well as in the optional deposition coating of metal and/ or metal oxide.

In an embodiment, the roll coating method is a rotogravure coating method, such as a reverse rotogravure coating method.

The aqueous solution of PVOH or EVOH may have a solid content from 7 to 13 weight-%, such as from 9 to 13 weight-%, such as from 10 to 12.5 weight-%.

The steps of applying the aqueous solution of the gas barrier polymer and subsequently drying the applied aqueous gas barrier polymer coating may be repeated once such that each coating step applies an aqueous gas barrier polymer coating at an amount from 0.5 to 1 g/m², dry weight. This has been found to work optimally in a high-speed process, i.e. to apply thin and even coatings with few misses and defects and accordingly to obtain sufficient oxygen barrier properties, as well as to be able to dry the coatings carefully, yet quickly enough for the high speed of the coating line, including to avoid defects forming within the coating during the drying step. At the same time, for the selected qualities of paper substrates, the wet, thinly applied coating of the gas barrier polymer solution levels out the roughness of the substrate surface, while still retaining coating cohesion to not being broken or partly absorbed by the surface of the substrate, before it is dried into a coherent and even barrier coating layer.

In a preferred embodiment, in each drying step, the temperature of the surface of the web substrate is consistently kept below 85 °C, such as below 80 °C.

The optional vapour deposition coating may be an aluminium metallization coating or a coating of aluminium oxide or a mixed coating of aluminium as well as aluminium oxide.

According to a second aspect of the invention, a laminated packaging material is provided, which comprises the barrier-coated cellulose-based substrate as manufactured by the method of the first aspect, and further comprises a first outermost protective material layer and a second innermost liquid tight, heat sealable material layer, wherein the laminated packaging material exhibits an oxygen transmission value of 0.5 cm3 /m2, 24h, 0,2 atm oxygen, at 50 % RH, or lower, as measured according to ASTM F1927-14, the thus measured oxygen barrier properties being provided solely by the coating materials in the first aspect.

The first outermost protective material layer may be a thin layer of polymer having the purpose of protecting the paper- or paperboard-based laminated packaging material against dirt and moisture on the outside environment of a closed packaging container, i.e. on the side to be directed towards the outside of a packaging container produced from the packaging laminate.

The second innermost liquid tight, heat sealable material layer may comprise a layer of a thermoplastic polymer, which is readily heat sealable by available heat sealing methods, such as induction heat sealing or ultrasonic heat sealing, or mere contact heat sealing, and is located on the barrier-coated side of the barrier-coated paper- or cellulosebased substrate, to be directed towards the inside of a packaging container produced from the packaging laminate, i.e. to be in direct contact with the packaged food product.

The second innermost liquid tight, heat sealable material layer may comprise a polyolefin polymer, such as a polyethylene from the lower density range, such as selected from the group consisting of LDPE, LLDPE, m-LLDPE and any blend of two or more thereof.

According to an embodiment, both the first outermost protective material layer and the second innermost liquid tight, heat sealable material layer may comprise a polyolefin polymer, such as polyethylene polymers of the same or different kinds.

For the purpose of carton packaging of oxygen-sensitive products, such as liquid or semi-liquid or viscous food products, the laminated packaging material may further comprise a bulk layer of paper or paperboard or other cellulose-based material, and, arranged on the inner side of the bulk layer of paper or paperboard, between the bulk layer and the second innermost liquid tight, heat sealable material layer, thus comprises said barrier-coated cellulose-based substrate. The bulk layer may contribute to the bending stiffness of the laminated packaging material, and to dimensional stability of fold-formed packaging containers made thereof, to withstand strong, acting forces created by movement in the packed content of for example liquid and viscous oxygen-sensitive products, during distribution and handling.

In an embodiment, for the purpose of such liquid carton packaging, the second, innermost liquid tight, heat sealable polyolefin layer is a pre-manufactured polyolefin film, such as a pre-manufactured polyethylene film, such as a cast, biaxially oriented polyethylene film comprising at least one layer with a majority of an LLDPE polymer, for improved robustness of the mechanical properties of the laminated packaging material.

In a third aspect of the invention there is provided a packaging container comprising the laminated packaging material of the second aspect. According to an embodiment, the packaging container is manufactured at least partly from the laminated packaging material of the invention, and according to a further embodiment it is in its entirety made of the laminated packaging material.

While it has hitherto been assumed that improved gas barrier properties from such barrier-coated cellulose-based substrates should be achieved by sourcing better papers or substrates, which inherently by themselves provide gas barrier properties when further laminated to polymer layers, or by coating more polymer having inherent gas barrier properties in thicker layers, it has now become better understood that the surface portion of the paper or cellulose-based substrate plays a key role for the optimal performance of subsequently applied coatings to bring the gas barrier properties, together with an optimized method for applying the barrier coatings at high and reliable quality, i.e. without defects and thickness variations, under industrially viable conditions and minimized consumption of barrier materials. The meaning of industrially viable conditions is that it must be possible to apply good barrier coatings at high speed, and consequently, at low or reasonable, balanced cost.

What has been seen is that the barrier qualities of the cellulose-based substrate itself do not need to be high, and the amount of coated gas barrier polymer as a barrier pre-coating may be minimized under certain conditions, to still produce a high-quality barrier-coated paper or cellulose-based substrate in an economic manner.

The use of a barrier-coated cellulose-based substrate as described above and manufactured by the method of the invention, thus may provide for good gas-barrier properties in laminated packaging materials and in packaging containers made thereof, at industrial scale, and may also impart improved repulpability and recycling properties, i.e. increased sustainability, due to the increased content of easily repulpable cellulose fibres.

Generally, the use of a cellulose-based substrate in laminated materials and packages provide for a greater proportion of fibre content, which is both of renewable, i.e. of non-fossil origin, and possible to recycle or to biodegrade for recirculation of the old materials into creation of new materials. Moreover, the use of papers or cellulose-based substrates as "facing layers" in a sandwich configuration, supports the use of bulk materials having a lower bending stiffness, thus being of a lower fibre quality and less expensive or being of lower density and thus using lower amount of fibers, by laminating such facing layers on each side of the bulk layer.

Thus, the gas-barrier-coated cellulose-based substrate obtained by the method of the first aspect, with the resulting material layer configuration, provides improved barrier properties to a laminated packaging material comprising it, and may further impart also a good recyclability and sustainability profile.

### Detailed description

With the term "long-term storage", used in connection with the present invention, is meant that the packaging container should be able to preserve the qualities of the packed food product, i.e. nutritional value, hygienic safety and taste, at ambient conditions for at least 1 or 2 months, such as at least 3 months, preferably longer, such as 6 months, such as 12 months, or more.

With the term "package integrity", is generally meant the package tightness, i.e. the resistance to leakage or breakage of a packaging container. The term encompasses the resistance of the package to intrusion of microbes, such as bacteria, dirt, and other substances, that may deteriorate the filled food product and shorten the expected shelf-life of the package.

One main contribution to the integrity of a package from a laminated packaging material is provided by good internal adhesion between adjacent layers of the laminated material. Another contribution comes from the material resistance to defects, such as pinholes, ruptures and the like within each material layer itself, and yet another contribution comes from the strength of the sealing joints, by which the material is sealed together at the formation of a packaging container. Regarding the laminated packaging material itself, the integrity property is thus mainly focused on the adhesion of the respective laminate layers to its adjacent layers, as well as the quality of the individual material layers. Regarding the sealing of the packages, the integrity is mainly focussed on the quality of the sealing joints, which is ensured by well-functioning and robust heat-sealing operations in the filling machines, which in turn is ensured by adequately adapted heat-sealing properties of the laminated packaging material.

The term "liquid, semi-liquid or viscous food" generally refers to food products having a flowing content that optionally may contain also solid pieces of food. Dairy and milk, soy, rice, grains and seed drinks, juice, nectar, still drinks, energy drinks, sport drinks, coffee or tea drinks, coconut water, wine, soups, crushed tomatoes, sauce (such as pasta sauce), beans and olive oil are some non-limiting example of food products contemplated.

Examples of other oxygen-sensitive food products, possible to package and protect with the laminated packaging materials of the present disclosure are e.g. dry and/or fatty foods.

The term "aseptic" in connection with a packaging material and packaging container refers to conditions where microorganisms are eliminated, in-activated or killed. Examples of microorganisms are bacteria and spores. Generally an aseptic process is used when a product is aseptically packed in a packaging container. For the continued asepticity during the shelf-life of the package, the package integrity properties are of course very important. For long-term shelf-life of a filled food product, it may furthermore be important that he package has barrier properties towards gases and vapours, such as towards oxygen gas, in order to keep its original taste and nutritional value intact, such as for example its vitamin C content.

With the term "bulk layer" is normally meant the thickest layer or the layer containing the most material in a multilayer laminate, i.e. the layer which is contributing most to the mechanical properties and the dimensional stability of the laminate and the structural stability of packaging containers folded from the laminate, such as a thick paper, paperboard or carton. It may also mean a layer providing a greater thickness distance in a sandwich structure, which further interacts with stabilising facing layers, which have a higher Young's modulus, on each side of the bulk layer, in order to achieve sufficient such mechanical properties, such as bending stiffness, for achieveing structure stability of formed packaging containers.

OTR was measured with Oxtran 2/21 (Mocon) equipment based on coulometric sensors, according to ASTM F1927-14.

The method for determining OTR identified the amount of oxygen per surface and time unit at passing through a material at a defined temperature, a given atmospheric pressure, during a certain time, i.e at an atmosphere of 20, or alternatively, 100 % oxygen, expressed as 0.2 or 1 atm (oxygen), during 24 hours.

The substrates suitable for the method of the invention is not limited to a certain type of paper or cellulose, and includes also other cellulose-based substrates, based on any type of native cellulose, fibrous or fibrillar cellulose. The invention is not applicable, however, to substrates from plastics or polymers, such as films made from regenerated cellulose.

Papers or cellulose-based substrates having a surface smoothness of 130 ml/min Bendtsen or below, such as 120 ml/min or below, such as 100 ml/min or below, such as 80 ml/min or below, such as 50 ml/min or below, such as 30 ml/min or below, such as 25 ml/min or below, as measured according to ISO 8791:4, and a Cobb 60 surface water absorption value of 30 g/m² or lower, as measured according to ISO 535:2014, on its coating side ("top side" or "print side"), function well in the method of manufacturing barrier-coated structures according to the present invention, such that good such structures may be produced under industrially viable conditions. It is perceived that the combination of method steps, performed at high coating line speed, as listed for coating and manufacturing a barrier-coated cellulose-based substrate of the present invention, may improve the barrier properties of different paper substrates as long as the substrates fulfil the selected set of property parameters. If the surface roughness, measured as Bendtsen value in ml/min, is too high, there will be "valleys" and "peaks" in the surface of the cellulose-based material, such that the thinly applied wet coating of the aqueous solution of the gas barrier polymer, will not be able to fill and level out the "valleys" and still also cover the "peaks". Consequently, the applied and dried coating of gas barrier polymer will not be fully covering the surface, but have defects detectable by a dye colouring method, through which oxygen gas molecules can easily permeate through the coating. Accordingly, the contribution of gas barrier properties from such a defective and insufficient barrier coating will be reduced significantly. A rougher substrate surface naturally requires more polymer coating to be applied, which is also possible to apply at lower coating line speeds. At high coating speeds, however, there are limits to how much aqueous coating may be applied, to how much water may be evaporated off in a drying operation and to how high viscosity and solid content the aqueous barrier polymer solution can have.

In an embodiment, a surface roughness below 120 ml /min Bendtsen is needed, such as lower than 100 ml/min, such as lower than 80 ml/min, such as lower than 50 ml/min, such as lower than 30 ml/ min, such as lower than 25 ml/min. At below 30 ml/min, the substrate surface is really smooth and a thin coating of 0.5 g/m² of PVOH may be applied and still entirely cover and coat the surface.

The Cobb 60 method according to ISO 535:2014 measures the water absorption of the cellulose-based substrate under standardised conditions, and is in a way a measure of "coatability" of the cellulose-based substrate surface, i.e. the ability to be coated by an aqueous solution composition of a gas barrier polymer. If the surface can absorb too much of the solution before drying, the thinly applied wet coating will be broken and can not form a continuous coating of the gas barrier polymer. Accordingly, it is important that the Cobb 60 value is lower than 30 g/m², such as lower than 28 g/m², and preferably not higher than 25 g/m².

The surface of the top side of the cellulose-based substrate may exhibit a Bendtsen roughness value lower than than 30 ml/min and Cobb 60 absorption value of 25 g/m² or lower.

To be suitable for the final barrier-coating step by means of a vapour deposition coating process, the cellulose-based substrate needs to be thin and have a grammage of from 30 to 70 g/m², such as from 30 to 60 g/m², such as from 35 to 50 g/m², such as from 35 to 45 g/m², as measured according to ISO 536:2012, and have a density from 800 kg/m³ to 1400 kg/m³, such as from 900 to 1400 kg/m³, such as from 950 to 1400 kg/m³,as measured according to ISO 534:2011. For reasons of efficiency and production economy and to avoid blistering of the coating, due to air being entrapped in a fibrous, porous cellulose-based substrate, during coating and drying operations, a cellulose-based substrate having a high density combined with a rather low weight and low thickness is needed. On the other hand, cellulose-based substrates with a lower grammage than 30 g/m² may be mechanically too weak and/or less dimension stable, when they are coated with wet dispersions and subsequently dried, thus exhibiting shrinkage or curling problems.

It is thus more preferred to use cellulose-based substrates having a grammage of from 30 to 50 g/m², such as most preferable from 35 to 45 g/m², and a density from 900 kg/m³ to 1400 kg/m³.

The thickness of the cellulose-based substrate may be from 35 to 65 µm, such as from 35 to 60 µm, such as from 35 to 50 µm, such as from 35 to 45 µm. It has been seen that for some uses, such as for liquid-tight packaging of wet or liquid or viscous products, it may also be advantageous to use an as thin as possible high-density paper substrate, because less polymer may be needed in adjacent liquid-tight or heat-sealable layers at maintained integrity of the package and its heat seals.

In an embodiment, the surface of the top side of the paper- or cellulose-based substrate exhibits a Gurley porosity value greater than 1000 s/dl, such as greater than 2000 s/dl, according to Tappi T460 om-2. The advantage of the surface having a low porosity is that less aqueous solution of the gas barrier polymer will be absorbed into the cellulose-based substrate. Since each coating of the solution of the gas barrier solution is very thin, this is also important for the internal coherence of the coating as well as for the ability of the coating to form a smooth and even surface for receiving further coatings or layers there onto.

Thus, in a cellulose-based substrate suitable to be coated with a thin coating of an aqueous solution composition comprising an oxygen barrier polymer, the number and the size of pores in the substrate material should preferably be significantly reduced. By extensive refining of the pulp used for manufacturing of the substrate, the degree of fibre bonding will increase and thus reduce the porosity. Greaseproof paper is produced by such extensive refining and has sufficiently low porosity to provide a grease barrier. Greaseproof paper has thus been seen as a potential substrate or carrier for an additional gas-barrier coating. The resulting pulp has, however, high dewatering resistance and demands long time for stock dewatering and is both costly in its manufacturing process and undesired in repulping and recycling processes. The same is valid regarding parchment papers, which in their manufacturing acquire gelatinized fibres by passing a bath of sulphuric acid, which makes the fibres less dewaterable and repulpable, and moreover the parchment papers acquire undesired brittleness.

According to an embodiment, the cellulose-based substrate for the use of the invention, may be formed from cellulose fibres comprising at least 50% by dry weight of chemical pulp, such as Kraft pulp or sulphite pulp. Sulphate or sulphite pulp is used to obtain a paper that is tough enough for downstream processes, such as coating at high line speed, but also converting lamination and use of the final package.

Sulphate/kraft pulp may be preferred since it is widely produced in large quantities and is advantageous for improved repulping in recycling, and general dewatering of the fibres. Sulphite fibres normally have a higher proportion of refined fibres, which may have an effect slightly to the contrary depending on how high the proprtion is and on the degree of refinement. According to an embodiment of the invention, Kraft pulp may thus be preferred.

The cellulose-based substrate may be formed from cellulose fibres comprising 35-100 %, such as 35-80 %, such as 40-70 % of softwood pulp, by dry weight of the pulp used to form the high-density paper. The other part of the pulp composition may comprise hardwood fibres and some low amounts of other fibres.

A benefit of including softwood pulp is an improved runnability in the paper machine and beneficial strength/toughness properties in the resulting paper. A relatively high proportion of softwood pulp may facilitate sufficiently high density of the cellulose-based substrate without causing problems in dewatering during the manufacturing of the substrate as well as enabling repulping in recycling operations. The degree of refinement of the fibre compositions is further chosen to promote both dewatering and repulping abilities, and at the same time the formation of a dense paper with lower porosity.

Thus, whereas some substrate papers exist, which have inherent, good oxygen barrier properties, those are for other reasons, such as low recyclability (repulpability), less preferred for the final materials, and there is a need to be able to provide a major contribution of oxygen barrier properties by coating materials, to be applied and well bonded to, and well interacting with, the substrate surface.

To have good mechanical properties for coating at high coating line speeds above 300 m/min, such as at above 400 m/min, the cellulose-based substrate may have a tensile strength from 3 to 6 KN/m in the MD (machine direction) and from 1.5 to 3.5 KN/m, in the CD (cross direction). In the present disclosure tensile strength is measured according to ISO 1924-3:2005. A higher tensile strength may thus indicate a paper substrate, useful to withstanding web handling forces during coating and lamination operations.

The cellulose-based substrate may further have a tensile strain from 1.4 to 3.5 % in the machine direction and from 2.1 to 6.0 % in the CD.

The cellulose-based substrate may further have a tensile energy from 35 to 90 J/m² in the MD and from 37 to 140 J/m² in the CD.

Further, the E Modulus of the cellulose-based substrate may be from 9500 to 12500 MPa in the MD, and from 4000 to 7000 MPa in the CD.

Preferably, the beneficial barrier and recycling properties are obtained without sacrificing tensile strength and other mechanical properties.

To provide good gas barrier properties from a low amount of barrier coating materials, it has thus previously been seen that a vapour deposition coating, to be coated to mere nanometer thickness, first requires a thin but defect-free pre-coating from a gas barrier polymer to be applied onto the paper or cellulose-based substrate, in order to provide further barrier properties. The best working such barrier pre-coating is selected from vinyl alcohol polymers and copolymers, which have inherent gas barrier properties, and which are food safe and environmentally sustainable both regarding recyclability and in industrial coating and lamination processes. Such polymers are water dispersible and/or dissolvable in water and are applied by means of an aqueous "dispersion coating" process, or a so called "liquid film coating" process.

Industrially viable, i.e. high-speed, methods suitable for coating of the aqueous gas barrier polymer solution compositions of the invention are broadly any suitable wet roll coating methods, such as rotogravure roll coating, smooth roll coating, and reverse roll or gravure coating. In an advantageous embodiment of the method of the invention, the aqueous solution composition of a gas barrier polymer is applied by means of reverse gravure coating. The reverse direction of the gravure coating method has proven to better facilitate the smoothening of the coated surface, in comparison to the forward direction gravure coating, which rather functions as a printing method of the gas barrier polymer onto the surface than as a full coating method.

The gas barrier polymer of the aqueous solution coating composition may thus be a polymer or copolymer based on on vinyl alcohol monomers, such as selected from polyvinyl alcohol (PVOH), ethylene vinyl alchol copolymer (EVOH), and modified PVOH and EVOH copolymers which can form aqueous solutions. Such polymers have for example been modified in some cases by addition of carboxylic functional groups.

In an embodiment, the water soluble gas barrier polymer is PVOH, such as a PVOH of the type Poval^{®} from Kuraray, which provide good film formation properties, gas barrier properties, cost efficiency, food compatibility and odour barrier properties.

In another embodiment, the gas barrier polymer is a water soluble EVOH having a low content of ethylene monomer, such as an EVOH of the type Exceval^{®} from Kuraray. The advantage of using an EVOH polymer as gas barrier material is that the ethylene content supports resistance to humidity, such that the oxygen barrier properties are better maintained also at higher relative humidity, such as at 80 % RH. This is in particular relevant to the packaging of oxygen. sensitive liquids, such as in carton laminate packaging of liquid food.

Conventional EVOH polymers, are normally intended for extrusion and are not possible to disperse or dissolve in an aqueous medium in order to produce a thin liquid film coated barrier film of 4 g/m² or below. A water soluble EVOH comprises a higher amount of vinyl alcohol monomer units to be water-dispersible and the properties are close to those of liquid film coating grades of PVOH as possible. An extruded EVOH layer, on the other hand, is thus not an alternative to a liquid film coated EVOH, because it inherently has less similar properties to PVOH than EVOH grades for dispersion/ solution coating, and because it cannot be applied at a cost-efficient amount below 4 g/m² as a single layer by melt extrusion coating or melt extrusion lamination.

A PVOH-based gas barrier composition performs best when the PVOH has a degree of saponification of at least 98 mol %, such as at least 99 mol %, although also PVOH with lower degrees of saponification will provide oxygen barrier properties. The most advantageous quality and grade of PVOH for the method of the invention is Poval^{®} 6-98.

In a further embodiment, the PVOH may be a Poval^{®} 15-99.

In yet another embodiment, the PVOH may be a Poval^{®} 6-96, although the oxygen barrier provided by this grade may be a little lower.

Suitable EVOH grades to be coated in the method of the invention may be Exceval^{®} 4104 AQ, which has similar coatability properties to Poval^{®} 6-98, and Exceval^{®} HR-3010, which has similar coatability properties to Poval^{®} 15-99.

The solid content of the water soluble gas barrier polymer should be from 5 to 15 weight-%, in order to suit a roll coating application method, and may be adjusted to a suitable solid content dependent of the choice of EVOH or PVOH and the coating speed. The solid content in the method of the invention is more suitably from 7 to 13 weigth-%, such as from 9 to 13 weigth-%, such as preferably from 10 to 12,5 weight-%. At a solid content of 10 % of just above, it proved that the best quality PVOH coatings, i.e. even and smooth and substantially without defects in the coatings, were obtainable by the reverse gravure coating method. More specifically, better results were then obtained in combination with the PVOH grade Poval^{®} 6-98, at high coating line speed, above 300 m/min, such as at 400 m/min and above, such as at 600 m/min.

The viscosity of the aqueous solution of gas barrier polymer to be coated should be from 10 to 120 mPa*s, such as from 50 to 100 mPa*s. This allows for optimal pick-up of the gas barrier solution by the gravure roller and further transfer onto the substrate surface, at high line coating speeds above 300 m/min, such as at 400 m/min and above, such as at 600 m/min.

The barrier pre-coating composition may further comprise a low amount, such as from about 1 to about 10 weight %, based on dry coating weight, of an inorganic laminar compound, such as calcium carbonate, CaCOs, talcum or exfoliated nanoclay particles, such as bentonite. In such cases, the barrier layer may include from about 99 to about 90 weight % of the polymer based on the dry coating weight.

An additive, such as a dispersion stabiliser or the like, may also be included in the gas barrier composition, preferably in an amount of not more than about 1 weight % based on the dry coating. The total dry content of the composition is preferably from 5 to 15 weight-%, more preferably from 7 to 12 weight-%.

A further possible additive in the barrier pre-coating composition may be a polymer or compound with functional carboxylic acid groups, in order to improve the water vapour and oxygen barrier properties of a PVOH coating. Suitably, such polymer with functional carboxylic acid groups is selected from among ethylene acrylic acid copolymer (EAA) and ethylene methacrylic acid copolymers (EMAA) or mixtures thereof. In one embodiment, such a barrier layer mixture may essentially consist of PVOH, EAA and an inorganic laminar compound. The EAA copolymer may be included in the barrier layer in an amount of about 1-20 weight %, such as from 1 to 15 weight-%, such as from 1 to 10 weigth-%, based on dry coating weight.

It is believed that some further improved oxygen and water barrier properties may result from an esterification reaction between the PVOH and the EAA at an increased drying temperature, whereby the PVOH is crosslinked by hydrophobic EAA polymer chains, which thereby are built into the structure of the PVOH. Crosslinking can alternatively be induced by the presence of polyvalent compounds, e.g. metal compounds such as metal-oxides. Such mixtures are, however, more expensive because of the cost of the additives and may be less preferred from a recyclability point of view.

Thus, while it is more preferable to use a barrier pre-coating from a pure PVOH or EVOH composition, advantageous results may be obtainable also with gas barrier coatings comprising further additives as described above.

In an embodiment, aqueous solutions of vinyl alcohol (co-)polymers, such as PVOH or EVOH, may for example contain a low amount of an n-octanol as a defoaming additive, such as at an amount from 0.01 to 0.1 wt %.

The aqueous solution of the gas barrier polymer is applied evenly onto the surface of the top side of the web of the paper or cellulose-based substrate by means of a roll coating method to provide a coating at an amount from 0.5 to 2 g/m², dry weight. Below 0,5 g/m², insufficient gas barrier properties will be achieved, while above 2 g/m², the coating will not bring cost-efficiency to the packaging laminate, due to high energy cost and the short time available (because of the high coating line speed) for evaporating off the liquid. A recognisable level of oxygen barrier is achieved by PVOH at 0,5 g/m², and above, and a good balance between barrier properties, coating layer quality and cost, is achieved at coating layers from 0,5 and 2 g/m². Often, a thicker coating of the gas barrier polymer is desired in total, and thus at least one further coating step is added after the drying of the first coating layer has been completed.

In the method of the invention, the gas barrier coating is applied in at least two, consecutive steps with intermediate drying, as at least two part-layers. When applied as two part-layers, each layer is thus suitably applied in amounts from 0,5 to 2 g/m², such as from 0,5 to 1,5 g/m², such as preferably from 0,5 to 1 g/m², dry weight, and allows a higher quality total layer from a lower amount of liquid gas barrier composition. Most preferably, two part-layers of PVOH are applied at an amount of from 0,5 to 1 g/m² each.

The amount of applied wet coating is approximately ten times higher than the applied and dried solid target coating, thus the amount of applied wet coating of PVOH is from about 5 to about 20 g/m², such as from 5 to about 10 g/m², which thus explains that quite some grammage of water needs to be evaporated in the drying steps, at the high coating speed. It is important that not too much moisture remains on the coated substrate or is absorbed into the substrate, because the moisture may disturb any later steps in the coating method and cause defects in the barrier coatings applied, thus jeopardizing the coating quality and ultimately decreasing the oxygen barrier properties provided by the barrier-coated substrate.

The aqueous solution composition of the gas barrier polymer may be heated and applied at a temperature from 60 to 70 degrees Celsius. By heating to such a warm temperature, the risk for form ration of foam bubbles in the coating is reduced.

To further reduce bubble- or foam-formation in the aqueous gas barrier polymer solution, a defoaming additive may be added. A preferred defoaming agent is n-octanol, which is both food safe and proved to provide a better effect at low amounts, than other tested agents, such as at a low amount from 0.01 to 0.1 weight-%, such as at about 0.05 weight-%, of the solution. Other tested agents were noted to deteriorate the PVOH, such that they increased the OTR of the applied and dried PVOH coatings.

According to the method of the invention, it is very important to dry consistently at low temperatures only, as the wet coatings of aqueous solution of gas barrier polymer are very thin and may be damaged by too forceful heating being applied.

The drying step may be carried out by a hot air dryer, which also allows the moisture to evaporate and be blown away from the surface of the substrate by the air convection. The substrate temperature is kept constant at a temperature from 60 °C to lower than 95 °C, such as from 65 to lower than 90 °C, such as at from 70 to lower than 90 °C, such as from 70 to 85, such as from 70 to 80 °C, as it travels through the dryer. The drying may be partly assisted by irradiation heat from infrared IR-lamps, in combination with hot air convection drying, if needed at high lines speeds.

The more water that is added by the wet applied coating, the more has to be evaporated in the dryer at the high line speed. There is a balance between how high solid content there may be in the aqueous coating to reach a dry thin coating of only 1-2 g/m² versus the length of the dryer sections. The speed of drying may not be too rapid, due to the risk of skin formation, and it may not be too slow, due too high absorption into the paper leading to lower film thickness on the surface and/or a broken coating (having defects). The evaporation of the water should thus be controlled to avoid too high temperature of the surface of the substrate as well as skin formation.

Such balanced settings may be unique for each coating line/paper/coating combination.

Preferably, the method of the invention comprises a step of vapour depositing a barrier coating onto the first applied gas barrier pre-coating, obtained from the dried aqueous solution of the gas barrier polymer, by means of physical vapour deposition (PVD).

Such physical vapour deposition coatings may be of a material selected from metals, metal oxides and inorganic oxides.

In the method of the invention, the barrier deposition coating is selected from the group consisting of an aluminium metallisation coating, an aluminium oxide, AlOx, and a mixed coating of aluminium and AlOx. Preferably it is an aluminium metallisation coating.

Such thin vapour deposited coating layers are nanometer-thick, i.e. they have a thickness that is most suitably counted in nanometers, for example of from 5 to 500 nm (50 to 5000 Å), such as from 5 to 200 nm, more such as from 5 to 100 nm, such as from 5 to 50 nm.

Generally, below 5 nm the barrier properties may be too low to be useful and above 200 nm, such as above 100 nm, such as above 50 nm, depending on the quality of deposition coating, the barrier coating may be less flexible and, thus, more prone to cracking when applied onto a flexible substrate and would also cost more since the deposition coating speed has to be lower.

In an embodiment, the barrier deposition coating is applied to a thickness of from 10 to 80 nm, such as from 10 to 50 nm, such as from 10 to 45 nm.

Vapour deposited layers, substantially consisting of aluminium metal, may thus have a thickness of from 5 to 50 nm, more preferably from 5-40 nm, which corresponds to less than 1 % of the aluminium metal material present in an aluminium foil of conventional thickness for packaging, i.e. 6,3 µm. While vapour deposition metal coatings require significantly less metal material, they only provide a low level of oxygen barrier properties, at most, and need to be combined with a further gas barrier material in order to provide a final laminated material with sufficient barrier properties. On the other hand, it may complement a gas barrier layer like POVH or EVOH, which does not provide water vapour barrier properties and is rather sensitive to moisture.

Other examples of vapour deposition coatings are aluminium oxide (AlOx, Al₂O₃) and silicon oxide (SiOx) coatings. Generally, such PVD-coatings may be more brittle and less suitable for incorporation into packaging materials by lamination, while metallised layers do get better suited mechanical properties for lamination material despite being made by PVD.

Normally, an aluminium metallised layer inherently has a thin surface portion consisting of an aluminium oxide due to the nature of the metallisation coating process used.

For the PVD coating process to work optimally, the moisture content in the paper or cellulose-based substrate should be kept at from 4 to 8 %. If the paper substrate becomes too dry, it may curl its longitudinal edges toward each other and cause coating and handling problems in the method of the invention. If the moisture content becomes too high, on the other hand, the vapour deposition coating operation may not function properly to provide a high-quality coating.

In an embodiment, an aluminium metallised layer is applied to an optical density (OD) of 1.8 or above, such as from 1.8 to 3.5, such as from 2.0 to 3.0, preferably from 2.1 to 2.6. At an optical density lower than 1.8, the barrier properties of the metallised film may be too low.

The optical density is measured in production by means of a densitometer, i.e. an instrument (such as from Macbeth, Tobias or similar), which uses the principle of diffuse light transmission. The instrument is suitable for measuring the optical density values of films coated with aluminium metallization. The accuracy and precision of the measurements is high and about +/- 0.2 OD and about +/-0.01 OD, respectively, within a measuring range from 0 to 6.60 OD.

In lab measurements, a spectrophotometer may alternatively measure the light transmission over the full visible spectrum (380-800 nm). The optical density is calculated from the light transmission (T) value at 560 nm, according to a formula OD= -log₁₀ (I₁/I₀) and the values obtained are equally accurate (+/- 0.2 OD) and comparable to light transmission densitometer values.

Generally, thin coatings of metal or a mixture of metal and metal oxide provide barrier properties against water vapour and are used when the desired function is to prevent water vapour from migrating into and through the multilayer film or packaging laminate. Preferably, for the purpose of manufacturing food packaging materials, the metal in a metallisation or inorganic metal coating is aluminium (Al).

The barrier coated paper or cellulose-based substrate obtained according to the method of the invention, provides excellent low OTR and low WVTR and proves suitable for lamination into a laminated packaging material and further for the fold-forming and sealing operations of such a laminated material into packages.

A high quality of the dispersion coating is important and necessary also for a resulting high quailty in a subsequently coated vapour deposition coating. This is particularly important also in the case when the vapour deposition coating is a metallisation coating also intended for high-frequency induction heat sealing, as then it is particularly important for the coating to be homogenous and substantially defect-free.

The laminated packaging material comprising the barrier-coated cellulose-based substrate, further comprises a first outermost protective material layer and a second innermost liquid tight, heat sealable material layer. The second innermost liquid tight, heat sealable material layer may comprise a thermoplastic polymer, such as a polyolefin polymer or be made of a polyolefin polymer. The first outermost protective material layer may be transparent, to enable visibility of a printed décor pattern on the outside of the bulk layer. It may also comprise a thermoplastic polymer, such as a polyolefin polymer or be made of a polyolefin polymer.

A carton-based laminated packaging material for liquid food packaging may further comprise a bulk layer of paper or paperboard, a first outermost, protective material layer, a second innermost liquid tight, heat sealable material layer, and, arranged on the inner side of the bulk layer of paper or paperboard, towards the inside of a packaging container made from the packaging material, between the bulk layer and the second innermost liquid tight, heat sealable material layer, said barrier-coated paper or cellulose-based substrate.

In an embodiment, the carton-based laminated packaging material may thus comprise a bulk layer of paper or paperboard, a first outermost liquid tight, heat sealable polyolefin layer, a second innermost liquid tight, heat sealable polyolefin layer and, arranged on the inner side of the bulk layer of paper or paperboard, towards the inside of a packaging container made from the packaging material, between the bulk layer and the innermost layer, said barrier-coated paper or cellulose-based substrate.

The barrier-coated side of the barrier-coated paper- or cellulose-based substrate is thus directed towards the second innermost liquid tight, heat sealable layer. Any metallisation barrier coating is thus adjacent to the one or more second innermost liquid tight, heat sealable material layer(s).

A paper or paperboard bulk layer for use in the invention usually has a thickness of from about 100 µm up to about 600 µm, and a surface weight of approximately 100-500 g/m², preferably about 200-300 g/m², and may be a conventional paper or paperboard of suitable packaging quality.

For low-cost aseptic, long-term packaging of liquid food, a thinner packaging laminate may be used, having a thinner paper core layer. The packaging containers made from such packaging laminates are not fold-formed and are more similar to pillow-shaped flexible pouches. A suitable paper for pouch-packages usually has a surface weight of from about 50 to about 140 g/m², preferably from about 70 to about 120 g/m², more preferably from 70 to about 110 g/m². As the barrier-coated paper or cellulose-based substrate of the method of the invention in itself may contribute with some stability to the laminated material, the paper layer corresponding to a "bulk" layer may be even thinner, and interact with the barrier-coated cellulose-based substrate ni a sandwich interaction to still produce a laminated packaging material having the desired mechanical properties altogether.

The barrier-coated paper or cellulose-based substrate may be bonded to the bulk layer by an intermediate adhesive, or thermoplastic polymer bonding layer, thus binding the un-coated surface of the barrier-coated paper to the bulk layer. According to an embodiment the bonding layer is a polyolefin layer, such as in particular a layer of a polyethylene-based polyolefin copolymer or blend, including in the majority ethylene monomer units. The bonding layer may bind the bulk layer to the barrier-coated cellulose-based substrate by melt extrusion laminating the bonding polymer layer between a web of the bulk layer and a web of the cellulose-based substrate, and simultaneously pressing the three layers together while being forwarded through a lamination roller nip, thus providing a laminated structure by extrusion lamination.

In another embodiment, the barrier-coated cellulose-based substrate may be bonded to the bulk layer by wet application of an aqueous dispersion of an adhesive composition comprising an adhesive polymer binder onto one of the web surfaces to be laminated and pressing the two paper webs together while they are forwarded through a lamination roller nip, thus providing a laminated structure by wet lamination. The moisture of the aqueous adhesive composition is absorbed into the fibrous cellulose network of the two cellulose-based layers, and partly evaporating with time, during the subsequent lamination processes. There is thus no need for a forced drying step.

The aqueous adhesive polymer binder may be selected from the group consisting of acrylic polymers and copolymers, starch, cellulose and polysaccharide derivatives, polymers and copolymers of vinyl acetate and vinyl alcohol. For best possible environmental and sustainability profile, adhesive binders originating from plants or non-fossil sources are preferred.

Suitable thermoplastics for outermost and innermost heat sealable liquid-tight layers are polyolefins such as polyethylene and polypropylene homo- or co-polymers, preferably polyethylenes and more preferably polyethylenes selected from the group consisting of low density polyethylene (LDPE), linear LDPE (LLDPE), single site catalyst metallocene polyethylenes (m-LLDPE) and blends or copolymers thereof. According to an embodiment, the first, outermost, protective and liquid-tight layer is an LDPE, while the second, innermost heat sealable, liquid-tight layer is a blend composition of m-LLDPE and LDPE for optimal lamination and heat sealing properties.

The same thermoplastic polyolefin-based materials, as listed regarding the first, outermost and the second, innermost layers, and in particular polyethylenes, are also suitable as bonding layers in the interior of the laminated material, i.e. between a bulk or core layer, such as paper or paperboard, and a barrier film or sheet. In an embodiment, the thermoplastic interior bonding layer may be a polyolefin layer, such as a polyethylene layer, such as a low density polyethylene (LDPE) layer.

In a further embodiment, the second innermost liquid tight, heat sealable polyolefin layer is a pre-manufactured film comprising the same or similar polyolefins as described above, i.e. LDPE, LLDPE and/or m-LLDPE, such as a biaxially oriented film comprising at least one layer with a majority of an LLDPE polymer, for improved robustness of the mechanical properties of the packaging material. Due to the manufacturing process in film blowing and film casting operations, and optional subsequent film orientation operation steps, the polymers of such films acquire different properties from what is possible from (co-) extrusion coated polyolefin layers. Such a pre-manufactured, preferably oriented, polymer film may contribute to the mechanical robustness of a laminated packaging material and to mechanical strength and package integrity of formed and filled packaging containers from the laminate packaging material.

According to an alternative embodiment, suitable bonding or tie layers in the interior of the laminated material, such as for example between the bulk or core layer and the barrier-coated cellulose-based substrate, or between the outer heat sealable layer and the barrier-coated paper substrate, are also so-called adhesive thermoplastic polymers, such as modified polyolefins, which are mostly based on LDPE or LLDPE co-polymers or, graft co-polymers with functional-group containing monomer units, such as carboxylic or glycidyl functional groups, e.g. (meth)acrylic acid monomers or maleic anhydride (MAH) monomers, (i.e. ethylene acrylic acid copolymer (EAA) or ethylene methacrylic acid copolymer (EMAA)), ethylene-glycidyl(meth)acrylate copolymer (EG(M)A) or MAH-grafted polyethylene (MAH-g-PE). Another example of such modified polymers or adhesive polymers are so called ionomers or ionomer polymers. Preferably, the modified polyolefin is an ethylene acrylic acid copolymer (EAA) or an ethylene methacrylic acid copolymer (EMAA).

When the gas-barrier-coated cellulose-based substrate is further coated with a vapour deposition coating, which also adds water vapour barrier properties to the barrier-coated substrate, there is thus normally no need to add further gas or water vapour barrier material layers into a total laminated structure of packaging material for liquid carton packaging.

In a different embodiment, however, the gas-barrier-coated cellulose-based substrate, i.e. coated with the aqueous gas barrier solution only, may be laminated to a further water vapour barrier material by means of an interjacent bonding layer, instead of being directly coated with the water vapour barrier material. Thus, the gas-barrier-coated paper substrate may be bonded by its barrier-coated side to a pre-manufactured polymer film having a vapour deposited coating of metal or metal oxide. The vapour deposition coated side of the pre-manufactured film is thus bonded towards the gas barrier-coated paper substrate. The bonding layer may be a polymer or binder applied by means of melt extrusion lamination or by means of wet adhesive lamination, as described above. The polymer base of the pre-manufactured film may further comprise heat sealable polymer layers on its opposite side, which may take part in heat sealing operations of the laminated packaging material. Alternatively, or also, further, separately applied heat sealable polymers may be coated onto the inside of the pre-manufactured film, to form a second, innermost, liquid-tight and heat sealable layer of the laminated packaging material. Thus, also separately made, barrier-coated substrate papers and barrier-coated pre-manufactured polymer films may be combined into a laminated packaging material, to also work well to protect oxygen-sensitive products from too high exposure to oxygen under conditions of high moisture content, such as at 80-90 % relative humidity, in the laminated material.

The laminated packaging material may according to a different specific embodiment have a pre-manufactured polymer film substrate laminated on the inner side of the barrier-coated paper substrate, i.e. on the side of the paper substrate which is opposite to the side that is laminated to the bulk layer, wherein the polymer composition of the pre-manufactured polymer film also contains an inorganic laminar compound to provide the pre-manufactured polymer film with vapour barrier properties, instead of being vapour deposited with a metal or metal oxide coating. Such a filled polymer film can also protect the gas barrier coatings on the barrier-coated paper under conditions of high moisture content in the material (such as in packaging of oxygen-sensitive liquid products.

For the best possible oxygen and water vapour barrier properties to be provided by the thin barrier coatings, it is most advantageous and preferred, however, that the gas barrier polymer coating is directly further vapour deposition coated by the metal or metal oxide coating.

A laminated packaging material made according to the above provides good integrity when transformed into filled packaging containers, by good adhesion and interaction between the adjacent layers within the laminated construction and by providing good quality of the gas barrier coating and the vapour deposition barrier coating. Especially, for the packaging of liquids, and wet food, it was an important conclusion that the inter-layer adhesion within the laminated packaging material, as well as the oxygen gas barrier properties, may be maintained also under wet packaging conditions.

According to further embodiment, the packaging container formed from the laminated packaging material may be partly sealed, filled with liquid or semi-liquid food and subsequently sealed, by sealing of the packaging material to itself, optionally in combination with a plastic opening or top part of the package.

To conclude, robust and reliable packages for liquid food packaging for long term shelf-life and storage may be obtained by the barrier-coated cellulose-based substrate and the laminated packaging material comprising it, as defined by the invention, thanks to the improved barrier properties provided. The laminated packaging material structure works better for the forming into fold-formed packages, both from the improved adhesion between the substrate and the barrier material coatings and from the improved contribution to gas barrier properties from the barrier-coated substrate itself, which likely also is due to the improved combined cohesion and adhesion of the barrier coating layers to the surface of the barrier-coated cellulose-based substrate.

### Examples and description of preferred embodiments

In the following, preferred embodiments of the invention will be described with reference to the drawings, of which:
Fig. 1a schematically shows in cross-section an example of a gas-barrier-coated cellulose-based substrate, made by the method according to the invention,
Fig. 1b schematically shows a further example of a gas- as well as water-vapour barrier-coated cellulose-based substrate, made by the method according to the invention,
Fig. 2a shows a schematic, cross-sectional view of a laminated packaging material, comprising the barrier-coated cellulose-based substrate of Fig. 1a,
Fig. 2b is showing a schematic, cross-sectional view of a laminated packaging material comprising the barrier-coated cellulose-based substrate of Fig. 1b,
Fig. 2c is showing a further laminated packaging material comprising the barrier-coated cellulose-based substrate of Fig. 1b,
Fig. 3a shows schematically a method, for dispersion coating a gas barrier coating composition onto a cellulose-based substrate,
Fig. 3b shows schematically a method, for melt (co-) extrusion coating layer(s) of a thermoplastic heat sealable and liquid-tigth polymer onto a web sustrate, to form innermost and outermost layers of a packaging laminate of the invention,
Fig. 4 is showing a diagrammatic view of a plant for physical vapour deposition (PVD) coating onto a web substrate, by using a solid metal evaporation piece,
Fig. 5a, 5b, 5c and 5d are showing typical examples of packaging containers produced from the laminated packaging material according to the invention,
Fig. 6 is showing the principle of how such packaging containers may be manufactured from the packaging laminate in a continuous, roll-fed, form, fill and seal process, and
Fig. 7a-7f shows results in quality of wet-coated aqueous gas barrier coatings, by comparative coating trials.

### Examples

Various paper substrates were coated with aqueous solutions of PVOH under various circumstances at a high line speed of 300 m/min and above, such as at from 400 to 600 m/min, to verify that even and defect-free coatings were achieved for the purpose of providing the paper substrates with additional, reliable oxygen gas barrier properties also under industrially viable manufacturing conditions. At preceding coating experiments in pilot and lab scale this was possible, but at scaling up to industrial speed, significant problems were encountered.

At industrial line speeds, two inter-connected main problems arose. Firstly, there would not be sufficient time to evaporate off too high amounts of water, applied by the aqueous wet coating composition, as the line speed in the drying step, through a hot air convection drier is increased. Consequently, the moisture content in the gas barrier coated substrate may become too high, such as above 8 weight-%, and create problems in subsequent operations involving elevated temperatures, such as in a vapour deposition coating process or in other heated lamination processes. Secondly, because the line speed through the drier is increased, the temperature of the drying operation also needs to be increased, which leads to a higher heat load on the wet applied coating and a higher temperature of the paper substrate, which altogether promotes the formation of defects in the coating, such as skin formation, foam bubbles, pinholes and uneven, inhomogenous material in the coatings. It was thus important to be able to balance effects of changes in the coating and manufaturing methods, and identify a set of robust settings and parameters that can function for aqueous gas-barrier-coating at high coating line speeds.

A number of root-causes for defect-formation at high line speed were identified during experiments. The wet coatings applied may on the one hand not be too thick and heavy, on the other hand cover well the surface of the substrate to be able to form even and defect-free dry coatings. The characteristics of the surface of the paper substrate supports or counteracts the formation of an oxygen-tight dry polymer coating of PVOH or EVOH, from a thinly applied aqueous polymer solution. The need for a higher amount of applied wet coating, due to a rough and absorbing substrate surface counteracts the desire for coating at high line speed. The higher amount of water applied and an associated higher moisture content in the structure, further negatively influences the ability of the paper substrates to be subsequently coated and/or laminated. The need for a higher line speed counteracts the drying operation, with an increased need for more severe temperatures acting on the coated substrate. The higher temperature influences both the paper substrates and the coatings negatively. Consequently, it has been concluded that paper substrates having a higher density and a smooth surface generally work better for high-speed coating. Furthermore, the grammage of the papers should be rather as low as possible, as long as the web has sufficient mechanical strength. A low grammage of the paper substrate has good effects in subsequent vapour deposition coating steps, as well as later in the value chain, e.g. by causing less strain in laminated materials in the fold-forming into packages.

### Example 1

Three different high-density paper substrates were coated with gas barrier coating layers of PVOH with varying process parameters and compared to results obtained from coating in the same way a similar paper, however being less dense and having a less smooth surface. The webs of paper substrates were coated on their respective top sides at a speed of about 400 m/min. A first wet coating of an aqueous solution of the PVOH Poval^{®} 6-98, having a solid content of about 10 weight-% and a viscosity of about 50 mPa*s, was applied by reverse gravure coating at about 8 g/m², as measured by a gravimetric method. The wet coated substrate was forwarded to a drying station, wherein hot air acted on the wet substrate to evaporate off its water content, carefully regulating the temperature of the drying tunnel and the air such that the temperature of the surface of the substrate was kept lower than 85-90 degrees Celsius. Thus, after drying a dry coating of PVOH at 0.8 g/m² was provided. A second coating was applied in the same manner on top of the dried first coating at the same amount, and was subsequently dried to provide a full gas-barrier coating of PVOH at 1.6 g/m², dry weight, together with the first coating.

The PVOH coatings in Table 1 were applied under optimized coating conditions, which are as defined by the appended claim 1.

The moisture content in the paper substrate was simultaneously controlled to become within 4-8 weight-%, by the drying operations, in order to ensure that the next step of metallisation coating with aluminium by means of physical vapour deposition would be carried out without failure and defects. For the papers tested, it was seen that below a moisture content of 4 weigth%, the paper substrates tended to "curl", i.e. roll up in the cross-web direction, such that the web in the machine direction tended to form a paper tube.

The resulting even and smooth surface of the thus dried gas barrier coating in turn enables the application of a further high-quality vapour deposition coating, being coherent, homogenous without pinholes, and adhering well to the dried gas barrier coating surface.

A thin aluminium coating was thus applied onto the surface of the second PVOH coating by a passage through a PVD metallizer to an optical density of about 2.5, as measured by a light transmission densitometer, and a thickness of about 50 nm.

Subsequently the barrier-coated paper substrates were laminated into a same packaging laminate structure according to:
//outside 12 g/m² LDPE/ Duplex CLC 80 mN, paperboard bulk layer/ 20 g/m² LDPE/ barrier-coated paper substrate (as listed in Table 1) / 6 g/m² EAA adhesive polymer/ 13-20 g/m2 LDPE / 17 gsm LLDPE film//

**Table 1**

| **Paper** | **gram weight (g/m2)** | **density kg/m3** | **Bendtsen (ml/ min)** | **Cobb 60 g/m2** | **Gurley s/dl** | **OTR paper** | **Defects formed in PVOH Rank 1-4** | **OTR full laminate (2xPVOH+ met) 50% RH** | **OTR full laminate (2xPVOH + met) 80%RH** | **Recyclability rank 1-4** |
|---|---|---|---|---|---|---|---|---|---|---|
| A | 40 | 974 | 19 | 22.2 | 2580 | 32 | 1 | 0.5 | 0.5 | 1 |
| B | 45 | 1055 | 20 | 17 | 15900 | 9.2 | 1 | 0.24 | | 1 |
| C | 42 | 976 | 141 | 30 | 42300 | 0.4 | 3 | 0.4 | 0.4 | 2 |
| D | 41 | 672 | 192 | 30 | 35 | 1000+ | 4 | 4.6 | 6.5 | 3 |

The Duplex CLC paperboard was a clay-coated paperboard of the conventional type, and the innermost, liquid-tight and heat sealable layer was made of a pre-manufactured cast, biaxially oriented film comprising at least one layer with a majority of linear low density polyethylene (LLDPE). The barrier-coated side of the paper substrate was directed in the laminated structure towards the inside (corresponding to the inside of a packaging container manufactured from the laminated material). The paperboard bulk layer was laminated to the barrier-coated paper by means of melt extrusion laminating an LDPE polymer between the two webs of paperboard bulk layer and the barrier-coated paper substrate to be joined in a cooled lamination roller nip. The adhesive polymer EAA and the inner, adjacent layer of LDPE were coextrusion laminated together between the barrier-coated paper and the innermost pre-manufactured film comprising LLDPE. The outermost layer of LDPE, to be directed towards the outside of the laminate and packages made therefrom, was extrusion coated onto the outer side of the paperboard.

Oxygen transmission measurements were made with an Oxtran Mocon 2/21 equipment (an equipment based on coulometric sensors) at 23 °C at 50% and 80% RH (relative humidity), and the measured values were reported in cc/m², during 24 hours, at 0.2 atmosphere of oxygen gas (i.e. 1 atm air).

Paper A was a high-density calendered paper having a smooth surface and a grammage of about 40 g/m² and further also good coatability by a fairly low value of Cobb 60 absorption of 22 g/m².

Paper B was a significantly denser and less porous paper, measured to have a density of 1055 and a grammage of about 45, as well as an equally smooth and non-absorbing surface, well suited for aqueous polymer solution coating.

Paper C was a less smooth paper, having a similar density to paper A, yet being a much less porous paper. This paper comprised highly refined fibre components and fibrils, such that pores between longer fibres were filled with smaller cellulose constituents, which unfortunately also made the paper brittle and less suited for the use in flexible laminates for folded carton packaging purposes. Despite its denseness, paper substrate C had higher Cobb 60 absorption and its top side surface was less smooth than that of papers A and B.

All paper substrates A-C had been calendered in order to provide their higher density and surface smoothnesses.

Paper D was coated for comparison, being a more porous and less dense paper substrate, however still having a glassine type, rather smooth surface, thus also involving some finer cellulose fibres and fibrils to "close" its top surface.

It was concluded from the above coating and lamination trials that for paper substrates having a higher surface roughness, such as regarding paper C, a higher amount of coating would need be applied to form a gas barrier coating from an aqueous solution of PVOH without defects and with an even thickness to reduce the oxygen transmission further. Thus, in this test, it was seen that the OTR did not significantly improve the oxygen barrier. On the other hand, paper C had very high inherent oxygen barrier properties, i.e. a low OTR when laminated into a same laminate structure in the same way, without being barrier-coated. The inherent barrier properties were in paper C obtained by a combination of its content of cellulose fibrils and fines filling up the fibrous structure and of the paper being super-calendered, thus resulting in a very dense paper also having very low porosity. It had in earlier pilot lab tests been seen that paper C had a potential of being coated to very low total gas barrier values such as 0.2 cc /m2, 24 h, at 23 °C, 0.2 atm, 50 % RH, but it has also been seen in industrial trials that such low values were not possible to reach at industrial speed, i.e. 400 or 600 m/min, and that to reach a lowest possible OTR a first pre-coating of starch would be needed, before applying a PVOH gas barrier coating. Those trials thus concluded that the surface of paper C was too rough and that a further smoothening pre-coating would be needed. In this example, it was thus shown that a thin coating of merely 1.6 g/m² PVOH did not generate a robust and reliable coating without defects, why the oxygen transmission remained at the same level as of an uncoated paper C. Anyway, paper C was deselected due to other disadvantages, such as less suitable mechanical properties and recycling properties, which were derivable from the higher content of highly refined cellulose constituents. It had earlier also been concluded that for paper substrates having a higher roughness of the surface to be coated, it would be better to first level the surface by a pre-coating of a smoothening substance, such as for example starch, which has much lower, or no, inherent gas barrier properties.

It had been concluded in earlier trials that when good barrier -coated papers were measured at 50 % RH, the OTR values of laminated materials having a merely PVOH-coated paper, in comparison to a further metallised PVOH-coated paper, would be only less than a factor 2 higher. It had also been seen that at the OTR measurements at 80 % relative humidity of the laminate samples including also the metallisation coating, the effect of the different contributions from the different paper grades were levelled out and the oxygen barrier results seemed to land at the same high level (i.e. about the same low OTR values), provided that the coating was of good quality. On the other hand, if the OTR of the same packaging laminates with only PVOH-coated paper substrates were measured at 50 vs 80 % RH, the OTR increased by a factor from 4 to 10 at the 80 % RH, (0.2 atm oxygen and 23 degrees Celsius), due to the moisture-sensitivity of the gas barrier polymers (PVOH, EVOH, starch etc).

Table 1 further shows how the quality of the gas barrier polymer coating was ranked for the different papers, based on an internal test method for detecting defects in the barrier coating, after the second aqueous coating and subseqent drying step. A substantially defect-free polymer barrier coating ensured a further defect-free or defect-less aluminium metallisation coating, by the subsequent optional physical vapour deposition coating step. The quality of the aluminium metallisation coating was evaluated partly by observing its surface in a SEM microscope and partly by measuring the final oxygen transmission, OTR, value obtained in the laminated material therefrom.

### Example 2

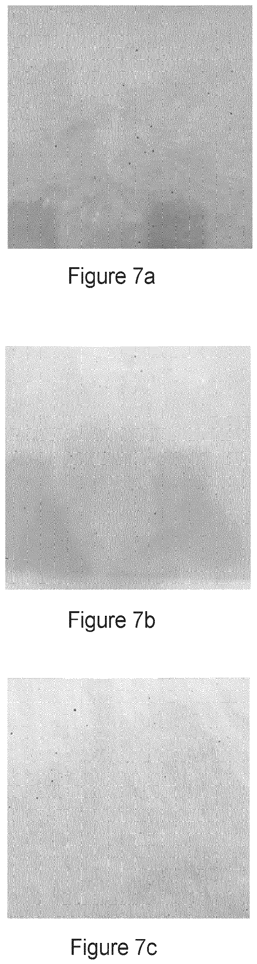

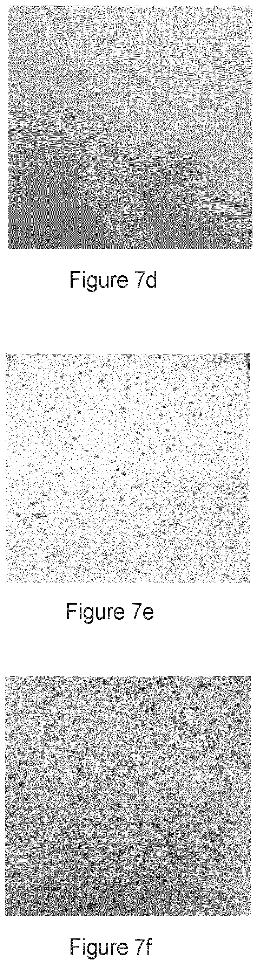

Figure 7 illustrates evaluations of the effect of method steps and coating conditions in the coating method of the invention. The parameters compared in this example were the maximum temperature of the surface of the cellulose-based substrate during the drying operation and of the solid content of the aqueous gas barrier solution composition. Defects in the PVOH coatings were visualised by the application of a solvent-based (non-aqueous) colourant composition, to indicate defects where the PVOH coating was not intact, such that the colour solution penetrated through the holes of the PVOH coating and reached the paperboard surface and coloured it with dots or blots, thus being clearly visible to a naked eye. The colourant composition comprises solvents, non-ionic surfactants and an oil-soluble organic red dye. The test samples were dried, clean and free of disturbing substances (fat, grease, etc). The colourant solution was applied onto the coated surface of the paper substrate, completely covering the sample area, and left to rest on the surface for about 10 minutes, before it was removed again by wiping the excess off, with a dry paper or cloth. Subseqeuntly, inspection and counting/ estimation of the thus coloured traces of any defects was carried out.

Figure 7 shows an example of an evaluation of a series of comparative coating trials at a coating line speed set to 400 m/min, firstly wherein the drying maximal temperature of the surface of the substrate was altered, and secondly wherein only the solid content of the aqueous solution of PVOH was altered, to illustrate the effect these features had on the quality of the applied PVOH coating. Photographs were taken of the thus tested paper substrate samples after being coated with an aqueous solution of PVOH (Poval^{®} 6-98), in two coating steps à 0.8 g/m² of the PVOH solution, and subsequently dried after each coating step, at different maximum surface temperatures. Normally, the maximum surface temperature would be reached at the end of each drying operation, i.e. for each given dried area towards the end of the drying step.

Thus, at the coating method of figure 7a, the temperature of the substrate surface at no occasion exceeded 60 degrees Celcius, and the solid content of the PVOH was set to 10 weight-%. A nice coated surface was the result, with only a few coloured dots resulting from the colourant test, indicating small holes in the dry coating through which the colourant solution had found its way through to colour the coated paperboard surface, as shown in figure 7a. The moisture content of the coated paper substrate was, however, rather high and on the limit to what was suitable for an optional next step of metallisation by PVD coating.

Similarly, the PVOH solution had the same composition and solid content in the coating methods performed at increasing maximum drying temperatures of the substrate surfaces, for the resulting coated papers shown in figures 7b-7e, while in figure 7f, the solid content was increased while the maximum temperature was kept constant in comparison to the coating operation in figure 7e.

Thus, in figure 7b, the drying temperature had instead a maximum drying temperature at 70 degrees Celsius, and it was seen how the moisture content decreased, while the number of defect indications was still low. In the method of figure 7c, the maximum temperature was instead kept below 80 degrees Celsius and the defect indications were still few, while the moisture content of the paper substrate was reduced to a more suitable 4.5 %.

Further, in the method related to figure 7d, the maximum temperature was increased to 90 degrees C of the paper substrate surface and the number of defects were also very low. The moisture content of the paper decreased to 3.9 weight-% by the increased drying temperature, which however was at the lower limit where a tendency was seen in the paper substrate to curl, i.e. roll up in the MD.

In the method related to figures 7e and 7f, the temperature was instead maintained at just below a too high surface temperature of 115 degrees Cesius and a drastic increase of defects was observed in both coated samples. The coated sample obatined in 7f was the worst, wherein also the solid content of the PVOH coating solution was higher, i.e. 12.5 %, while the coated sample 7e was slightly better, but still unacceptable as a gas barrier coating. Furthermore, in samples 7e and 7f, the paper substrate dried out and started to curl.

It was thus seen that the maximum temperature should not exceed 95 degrees C, in order to balance versus the moisture content of the barrier-coated paper substrate, and that very few defects were obtained if such drying conditions could be maintained. A maximum drying temperature just below 80-90 degrees Celsius seemed to be optimal, to provide fewest possible defects and a low but balanced moisture content in the substrate. All coated samples relating to figures 7a, 7b, 7c and 7d had very few defects, i.e. less than 10 coloured dots per dm². In both resulting coated papers from figures 7e and 7f, the moisture content was too low, and curling of the paper was observed. The results obtained by the method of figures 7e and 7f were considered as failures with Rank 4 being "very bad", as compared to the rankings of Table 1.

It should be generally noted that what is seen as several or many dots or defect indications, is a bad oxygen barrier coating, regardless of the material used, i.e. each colour dot or spot represents a penetration point for oxygen through the coating and the barrier-coated cellulose-based substrate.

Table 1 further shows the ranking of the paper substrates as regarding recyclability, i.e. the repulpability of the paper substrates. The repulpability was tested by a Valmet repulping method in a Valmet pulper of the type HD400, comprising the re-pulping of 0.5 kg of air-dried paper substrate, cut into 0.04 by 0.10 m pieces, together with 15 litres of water at 42 deg C in a Valmet pulper at a rotating speed of 50 Hz, for 7.5 minutes. The ability of the pulped samples to dewater was studied and the looks and feel of remaining cellulose in the filters. The repulpability was evaluated based on visual appearance of the the pulp as well as handsheets.

Paper A was repulped in a good way and only few paper flakes were seen in the pulp as well as hand sheets. Flocculation of fibres, which is a sign of long fibres, was seen in the hand sheets. Long fibres are good from recyclability point of view.

Paper C was completely repulped. The pulp was thicker compared to the other variants and no larger paper flakes were seen in the pulp. The amount of short fibres was higher from beginning which resulted in very refined fibres after repulping. The refined fibres and/or fines clogged the filter in the sheet maker and consequently the process to make hand sheets was very slow.

Paper D showed a relatively bad repulping result. Paper flakes were seen in the pulp as well as in the hand sheets. More short fibres were seen in the handsheets compared to the other papers.

An internal, relative rank between the samples was allocated, in the order from 1-4, where 1 denotes good "repulpability". Papers C and D thus proved to not be as good as expected, although having been selected with this property as an aim.

Laminated packaging materials such as those produced with the configuration described above in connection to Table 1 were further evaluated in limited filling machine trials for forming and filling and sealing into filled packaging. No major problems regarding packaging integrity (i.e. package tightness vs the surrounding environment) and sealability properties were identified during the trials, which therefore were considered successful.

Furthermore, it was concluded that laminate configurations having a pre-manufactured, heat sealable film on the inside of the barrier-coated paper substrate was favourable to the mechanical robustness of the laminated packaging material and to packaging containers manufactured by heat sealing therefrom.

Further, relating to the attached figures:

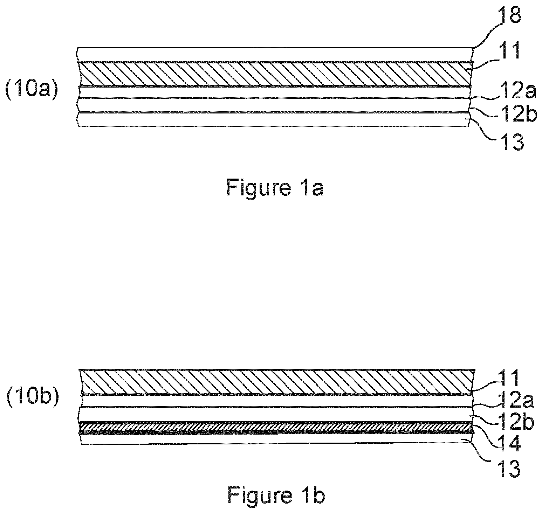

In Fig. 1a, there is shown, in cross-section, an example of a barrier-coated cellulose-based substrate 10a, made by the method of the invention. The cellulose-based substrate 11 is a paper having a density above 900 kg/m³, a grammage weight of about 40 g/m², a top side rougness Bendtsen value of lower than 30 ml/min and a Cobb 60 value of less than 25 g/m², and is provided with a first gas barrier coating 12a of PVOH, Poval^{®} 6-98, from Kurary, which has been applied in the form of an aqueous solution by means of reverse gravure coating and subsequently heat dried at from 80 to 85 degrees Celsius, in order to evaporate the water from the wet applied coating. The dry weight of the resulting PVOH gas barrier coating is about 0.8 g/m². Further, the paper substrate has a second gas barrier coating 12b of the same PVOH solution, Poval^{®} 6-98 from Kuraray, applied on the dried surface of the first gas barrier coating 12a. The gas barrier coating layer 12b has been applied and dried in the same way and the dry weight of the second PVOH gas barrier coating is also about 0.8 g/m². The gas barrier coatings of PVOH are sensitive to moisture, dirt and liquids, why there is optionally applied at least a further layer or coating 13 of a protective polymer onto the second coating layer of PVOH 12b. The further layer or coating 13 may be a thermoplastic polymer, such as a polyolefin, such as an LPDE. Such a further layer is normally necessary for measuring the oxygen transmission of the barrier-coated cellulose-based substrate, in order to cover any defects, such as pinholes, in the first PVOH coating. The idea here is to not have any, or a negligible number of defects in the coating, why the further layer of a polymer onto the barrier coatings should not actually be necessary. Anyway, the further polymer layer or further coating itself has no inherent oxygen barrier properties and thus does not contribute further to the oxygen transmission value measured. A further layer or coating 18 of a protective polymer, which may be of the same or a different kind as the coating or layer 13, may optionally be applied also onto the other side of the cellulose-based substrate. Consequently, a simple laminated material 10a may be obtained by merely adding outermost, protective polymer layers 13 and 18 to the barrier-coated cellulose-based substrate.

In Fig. 1b, there is shown, in cross-section, a further example of a barrier-coated cellulose-based substrate 10b, made by the method of the invention. First and second gas barrier coatings of the same PVOH are applied in the same way and onto a same cellulose-based substrate 11 as above in connection to Fig. 1a. Further, the thus gas-barrier-coated cellulose-based substrate is vapour deposition coating with an aluminium metallisation coating 14, i.e. an aluminium-metallised layer, applied by physical vapour deposition onto the dried surface of the second gas barrier coating 12b, to an optical density of about 2 and a thickness of about 40 nm. In the same way as above in Fig. 1a, there is optionally applied at least a further layer or coating 13 of a protective polymer onto the metallisation coating layer of aluminium 14. The further layer or coating 13 may be a thermoplastic polymer, such as a polyolefin, such as an LPDE. A further layer or coating 18 of a protective polymer, which may be of the same or a different kind as the coating or layer 13, may be applied also onto the other side of the cellulose-based substrate (not shown). Consequently, a simple laminated material 10b may be obtained by merely adding outermost, protective polymer layers 13 and 18 (not shown) to the barrier-coated cellulose-based substrate.

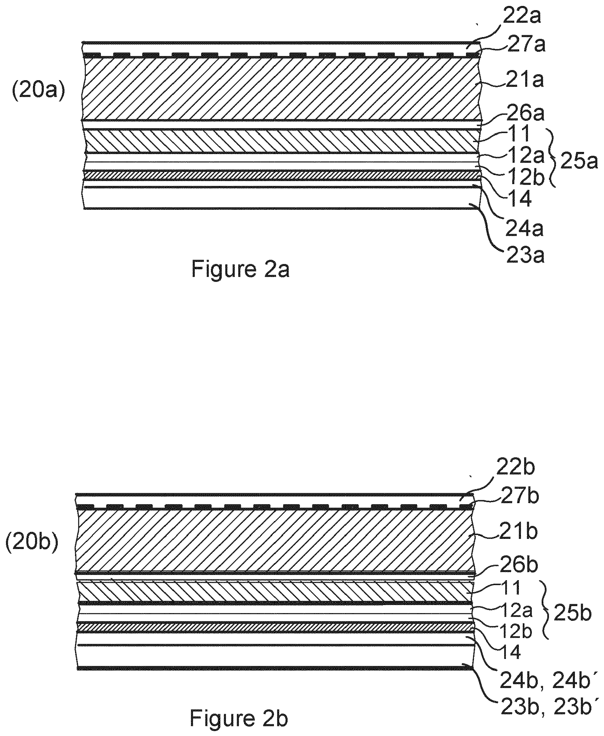

In Fig. 2a, a laminated packaging material 20a for packaging of oxygen sensitive products, such as for liquid carton packaging is shown, which comprises a barrier-coated cellulose-based substrate 25a (10b of fig. 1b), manufactured by the method of the invention. The laminated material further comprises a bulk layer 21a of paperboard, having a bending force of 80 mN and a grammage weight of about 200 g/m², and further comprising an outermost, protective, such as liquid tight and heat sealable polymer layer 22a applied on the outside of the bulk layer 21a, which side is to be directed towards the outside of a packaging container produced from the packaging laminate. The layer 22a is transparent to show the printed décor pattern 27a, which is printed onto the bulk layer of paper or paperboard, to the outside. Thereby, the printed pattern may inform about the contents of the package, the packaging brand and other information targeting consumers in retail facilities and food shops. The polymer of the outermost layer 22a may be a polyolefin, such as a conventional low density polyethylene (LDPE) of a heat sealable quality, but could also include further similar polymers, including LLDPEs. It is applied at an amount of about 12 g/m². An innermost liquid tight and heat sealable layer 23a is arranged on the opposite side of the bulk layer 21a, which is to be directed towards the inside of a packaging container produced from the packaging laminate, i.e. the layer 23a will be in direct contact with the packaged product. The thus innermost heat sealable layer 23a, which is to form strong transversal heat seals of a liquid packaging container made from the laminated packaging material, comprises one or more in combination of polyethylenes selected from the groups consisting of LDPE, linear low density polyethylene (LLDPE), and LLDPE produced by polymerising an ethylene monomer with a C4-C8, more preferably a C6-C8, alpha-olefin alkylene monomer in the presence of a metallocene catalyst, i.e. a so called metallocene - LLDPE (m-LLDPE). It is applied at an amount of about 22 g/m².

The bulk layer 21a is laminated to the uncoated side of the barrier-coated paper substrate 10b, from Fig. 1b, i.e. 25a, by an intermediate bonding layer 26a of a low density polyethylene (LDPE). The intermediate bonding layer 26a is formed by means of melt extruding it as a thin polymer melt curtain between the two paper webs and thus laminating the bulk layer and the barrier-coated paper substrate to each other, as all three layers pass through a cooled press roller nip. The thickness of the intermediate bonding layer 26a is from 12 to 18 µm, such as from 12-15 µm.

The innermost heat sealable layer 23a may consist of one layer or alternatively of two or more part-layers of the same or different kinds of LDPE or LLDPE or blends thereof, and is well adhered to the metallised barrier deposition coating surface 14 of the barrier paper substrate 10b, by an intermediate coextruded tie layer, 24a of a few g/m², such as from 4 to 7 g/m², e.g. of ethylene acrylic acid copolymer (EAA) which thus bonds the innermost heat sealable layer(s) to the barrier coated paper substrate 10b, in applying the layers together in a single melt coextrusion coating step.

In Fig. 2b, another embodiment of a laminated packaging material 20b is shown, which comprises a barrier-coated cellulose-based substrate 25b, manufactured by the method of the invention. The laminated material comprises a paperboard bulk layer 21b, having a bending force of 80 mN and a grammage weight of about 200 g/m², and further an outer liquid tight and heat sealable layer 22b of polyolefin applied on the outside of the bulk layer 21b, which side is to be directed towards the outside of a packaging container produced from the packaging laminate. The polyolefin of the outer layer 22b is a conventional low density polyethylene (LDPE) of a heat sealable quality and has been applied at an amount of 12 g/m², but may include further similar polymers, including LLDPEs. An innermost liquid tight and heat sealable layer 23b is arranged on the opposite side of the bulk layer 21b, which is to be directed towards the inside of a packaging container produced from the packaging laminate, i.e. the layer 23b will be in direct contact with the packaged product. The thus innermost heat sealable layer 23b, which is to form strong heat seals of a liquid packaging container made from the laminated packaging material, comprises one or more in combination of polyethylenes selected from the groups consisting of LDPE, linear low density polyethylene (LLDPE), and LLDPE produced by polymerising an ethylene monomer with a C4-C8, more preferably a C6-C8, alpha-olefin alkylene monomer in the presence of a metallocene catalyst, i.e. a so called metallocene - LLDPE (m-LLDPE).

The bulk layer 21b is laminated to the barrier-coated paper substrate 25b, i.e. 10b described in Fig. 1b, by means of wet lamination with an intermediate bonding layer 26b of a thin layer of adhesive polymer, obtained by applying an aqueous dispersion of a polyvinyl acetate adhesive onto one of the surfaces to be adhered to each other and subsequently pressing together in a roller nip. This lamination step is performed in an efficient cold or ambient lamination step at industrial speed without any energy-consuming drying operation needed to accelerate the evaporation of the water. The dry amount applied of the intermediate bonding layer 26b is from 3 to 4 g/m² only, which explains that there is no need for drying and evaporation.

Thus, the amount of thermoplastic polymer can be significantly reduced in this lamination layer, in comparison to the conventional melt extrusion laminated bonding layer 26a of polyethylene, described in Fig. 2a.

According to a preferred embodiment, the innermost heat sealable and liquid-tight layer 23b consists of a pre-manufactured, oriented film, comprising at least one part-layer with a major proportion of linear low density polyethylene (LLDPE). The film may further comprise some LDPE.

The pre-manufactured film is laminated to the barrier-coated paper substrate, to the surface of its vapour deposited barrier coating, i.e. the aluminium metallisation, by means of an intermediate, melt extrusion laminated bonding-layer portion, comprising a tie layer of EAA as used also in the laminate of Fig. 2a, and/or a bonding layer 24b of LDPE, which is from 12 to 20 µm, such as from 12 to 18 µm, thick.

In an alternative embodiment, the pre-manufactured film 23b' may be laminated to the metallised coating by means of another wet lamination step, with an aqueous adhesive of an acrylic (co)polymer adhesive layer 24b', at ambient (cold) temperature, at an amount from 3 to 4 g/m².

A further embodiment, having all the features as described and a melt extruded bulk layer lamination layer 26a of Fig. 2a, but which is instead combined with the feature of an innermost heat sealable film configuration 23, 23b', applied either by means of melt extrusion lamination with a layer 24b, or by means of wet laminating with an aqueous adhesive, 24b', as described in connection to Fig. 2b, is also hereby disclosed.

A yet further embodiment, wherein the thin, wet, aqueous adhesive dispersion laminated layer 26b of Fig. 2b is combined with the conventional melt coextrusion coated inside layers 24a and 23a, is also conceivable and hereby disclosed.

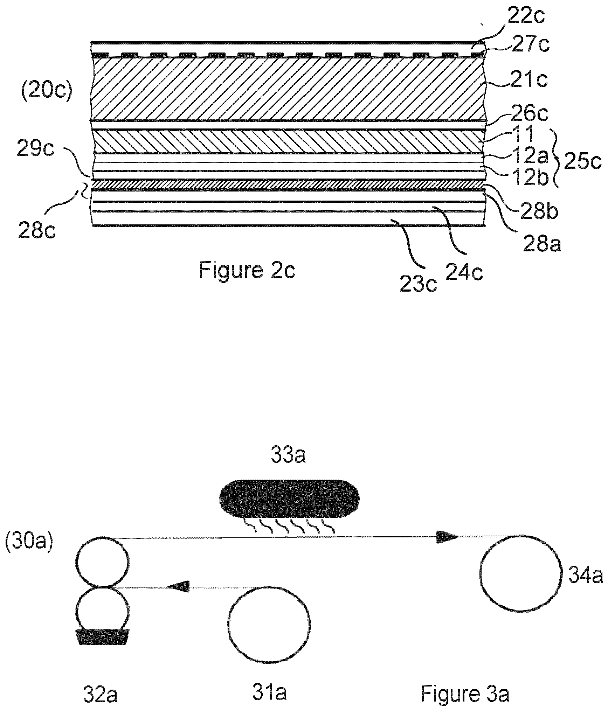

In Fig. 2c, a further embodiment of a laminated packaging material 20c is shown, which comprises a barrier-coated cellulose-based substrate 25c, i.e. 10a described in Fig. 1a manufactured by the method of the invention. Such a gas-barrier-coated cellulose-based substrate, not further coated with a vapour deposited water-vapour barrier layer, may in a laminated packaging material instead be complemented by laminating the barrier-coated cellulose-based substrate on its innerside to a vapour deposition coated pre-manufactured polymer film 28c. Thus, the laminated packaging material 20c has the same layers, being of the same type as the corresponding layers of Fig. 2a or Fig. 2b described above, regarding a bulk layer 21c of paperboard, an outermost, protective polymer layer 22c and an interior lamination layer 26c.

The pre-manufactured polymer film 28c comprises a polymer film substrate 28a and a vapour deposition coating of aluminium metallisation and/ or aluminium oxide. The thus pre-manufactured vapour deposition coated film 28c is laminated to the gas-barrier-coated cellulose-based substrate 25c by means of an intermediate bonding layer 29c, such as a melt extrusion laminated layer. The pre-manufactured polymer film may comprise heat sealable layers for the innermost side of the laminated material 20c. Alternatively, further inside layers 23c, 24c are melt co-extrusion coated onto the inside of the pre-manufactured film 28c.

In Fig. 3a, a process of aqueous dispersion coating 30a is shown, which may be used for applying the aqueous composition of gas barrier polymer coating layers 12a and 12b. The paper substrate web 31a (e.g. the cellulose-based substrate 11 from Figures 1a and 1b is forwarded to the dispersion coating station 32a, where the aqueous composition is applied by means of rollers onto the top surface of the substrate. If the surfaces of the two sides of the substrate are different, usually there is one side more suitable for receiving a coating or a printed décor pattern, and this is thus the surface to be coated for this invention (this side is called the top side or the print side). Since the composition has an aqueous content of from 80 to 99 weight-%, there will be a lot of water on the wet coated substrate that needs to be dried by heat, and evaporated, to form a continuous coating, which is homogenous and has an even quality with respect to barrier properties and surface properties, i.e. evenness and low occurrence of defects. The drying is carried out by a hot air dryer 33a, which also allows the moisture to evaporate and be removed from the surface of the substrate. The temperature of the substrate surface as it travels through the dryer, is consistently kept below 95 °C, such as at from 60 to 95 °C, such as at from 70 to 90 °C, such as below a temperature from 80 to 90 °C, such as below a temperature of about 85 °C.

The resulting gas-barrier-coated paper substrate web 34a is forwarded to cool off and is wound onto a reel for intermediate storage. At an optional, following or later stage, the thus coated web may be forwarded to a further coating step for physical vapour deposition coating of a barrier deposition coating 14, onto the gas-barrier coated paper.

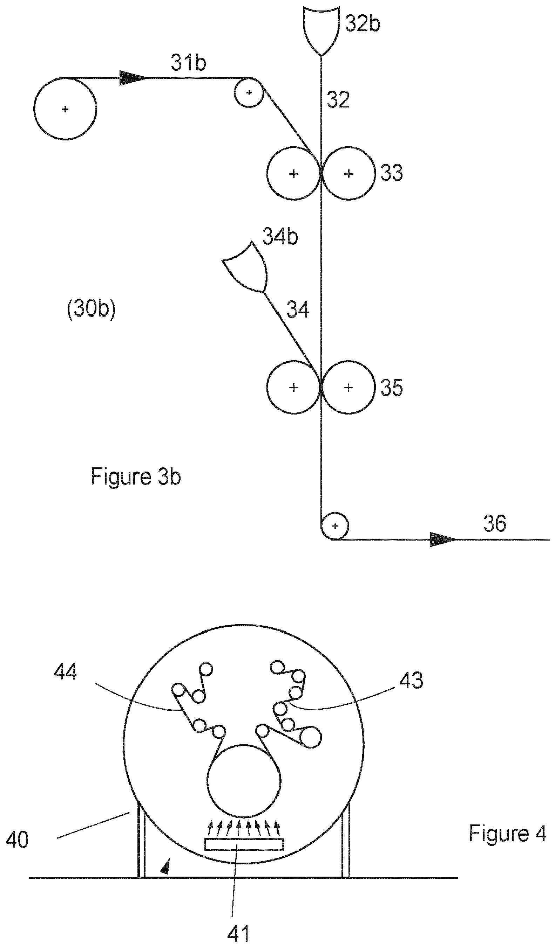

Fig. 3b shows a process for the final lamination steps in the manufacturing of the packaging laminate 20a, 20b or 20c, of Fig. 2a, 2b and 2c, respectively, after the bulk layer 21a, 21b, 21c has been first laminated to the barrier-coated cellulose-based substrate 10a of Fig. 1a, (i.e. 25a or 25b of Fig. 2a and 2b) or to the barrier-coated substrate 10b of Fig. 1b (25c).

As explained in connection to Fig. 2a and 2b, the bulk layer paperboard 21a;21b may be laminated to the barrier-coated paper substrate 10a; 25a; 25b by means of wet, ambient aqueous adhesive lamination, or by means of melt extrusion lamination. A wet lamination adhesive may be applied as described in Fig. 3a related to dispersion coating, and the lamination is carried out by simply pressing the surfaces to be joined together, without forced drying of the adhesive composition. The principal method of melt extrusion lamination is shown in Fig. 3b, as described below.

The resulting paper pre-laminate web 31b is forwarded from an intermediate storage reel, or directly from the lamination station for laminating the pre-laminate of the bulk layer to the barrier-coated celullosed substrate. The non-laminated side of the bulk layer 21a; 21b, i.e. its print side, is melt-extrusion coated by being joined at a cooled roller nip 33 to a molten polymer curtain 32 of the LDPE, which is to form the outermost layer 22a; 22b of the laminated material, the LDPE being extruded from an extruder feedblock and die 32b. Subsequently, the pre-laminate bulk-paper web, now having the outermost layer 22a;22b coated on its printed side, i.e. the outside, passes a second extruder feedblock and die 34b and a lamination nip 35, where a molten polymer curtain 34 is joined and coated onto the other side of the pre-laminate, i.e. on the barrier-coated side of the paper substrate 10; 25a;25b. Thus, the innermost heat sealable layer(s) 23a, optionally together with a tie layer of an adhesive polymer having functional groups to increase its bonding capability to adjacent layers, are coextrusion coated onto the inner side of the paper pre-laminate web, to form the finished laminated packaging material 20a; 36, which is finally wound onto a storage reel, not shown.

These two coextrusion steps at lamination roller nips 33 and 35, may alternatively be performed as two consecutive steps in the opposite order.

According to another embodiment, one or both of the outermost layers may instead be applied in separate pre-lamination stations, where the coextrusion coated layer is first applied to the outside of the (printed) bulk paperboard layer and onto the metallisation coating of the barrier-coated paper substrate, and finally thereafter, the two pre-laminated paper webs may be laminated to each other, as described above.

According to a different embodiment, the innermost layers of the heat sealable and liquid-tight thermoplastic layers are applied in the form of a pre-manufactured film, which is laminated to the coated side of the barrier-coated paper substrate 10a; 10b; 25a, 25b.

As explained in connection to Fig. 2a and 2b, such an innermost layer 23a; 23b, 23b' may be laminated to the barrier-coated paper substrate 10a by means of melt extrusion lamination or by means of wet, ambient aqueous adhesive lamination.

Fig. 4 is a diagrammatic view of an example of a plant for physical vapour deposition, PVD, of e.g. an aluminium metal coating, onto a web substrate of the invention. The gas-barrier-coated paper substrate 44 is forwarded through a deposition chamber, in which it is subjected, on its gas-barrier-coated side, to continuous evaporation deposition 40, of evaporised aluminium, to form a metallised layer of aluminium or, alternatively to a mixture of oxygen with aluminium vapour, to form a deposited coating of aluminium oxide. The coating is provided at a thickness from 5 to 100 nm, preferably from 10 to 50 nm, to form the barrier-coated paper 43 of the invention. The aluminium vapour is formed from ion bombardment of an evaporation source of a solid piece of aluminium 41. For the coating of aluminium oxide, also some oxygen gas may be injected into the plasma chamber via inlet ports.

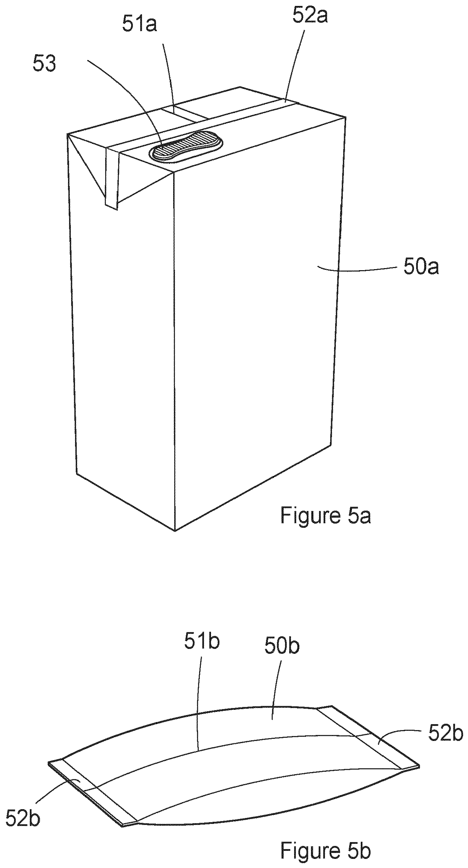

Fig. 5a shows an embodiment of a packaging container 50a produced from a packaging laminate according to the invention. The packaging container is particularly suitable for beverages, sauces, soups or the like. Typically, such a package has a volume of about 100 to 1000 ml. It may be of any configuration, but is preferably brick-shaped, having longitudinal and transversal seals 51a and 52a, respectively, and optionally an opening device 53. In another embodiment, not shown, the packaging container may be shaped as a wedge. In order to obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the only partly folded packaging container is still is easy to handle and dimensionally stable enough to put on a shelf in the food store or on any flat surface.

Fig. 5b shows an alternative example of a packaging container 50b produced from an alternative packaging laminate according to the invention. The alternative packaging laminate is thinner by having a thinner paper bulk layer, and thus it is not dimensionally stable enough to form a parallellepipedic or wedge-shaped packaging container, and is not fold formed after transversal sealing 52b. The packaging container will remain a pillow-shaped pouch-like container and be distributed and sold in this form.

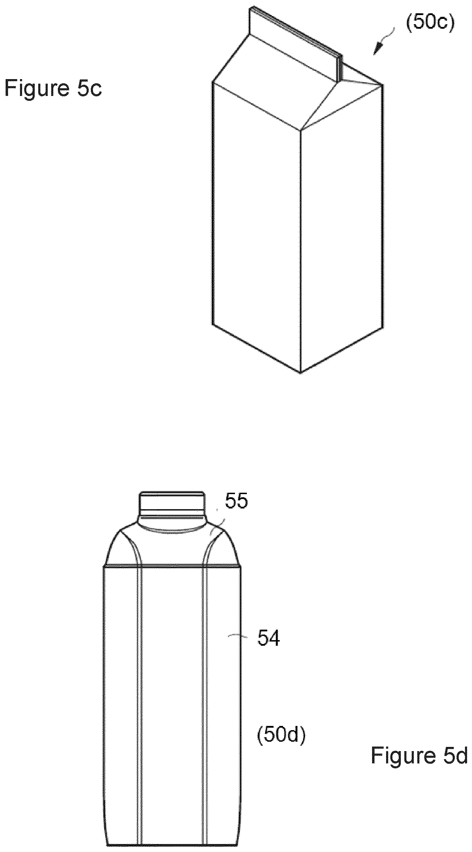

Fig. 5c shows a gable top package 50c, which is fold-formed from a pre-cut sheet or blank, from the laminated packaging material comprising a bulk layer of paperboard and the barrier-coated paper substrate of the invention. Also flat top packages may be formed from similar blanks of material.

Fig. 5d shows a bottle-like package 50d, which is a combination of a sleeve 54 formed from a pre-cut blanks of the laminated packaging material of the invention, and a top 55, which is formed by injection moulding plastics in combination with an opening device such as a screw cork or the like. This type of packages are for example marketed under the trade names of Tetra Top^{®} and Tetra Evero^{®}. Those particular packages are formed by attaching the moulded top 55 with an opening device attached in a closed position, to a tubular sleeve 54 of the laminated packaging material, sterilizing the thus formed bottle-top capsule, filling it with the food product and finally fold-forming the bottom of the package and sealing it.

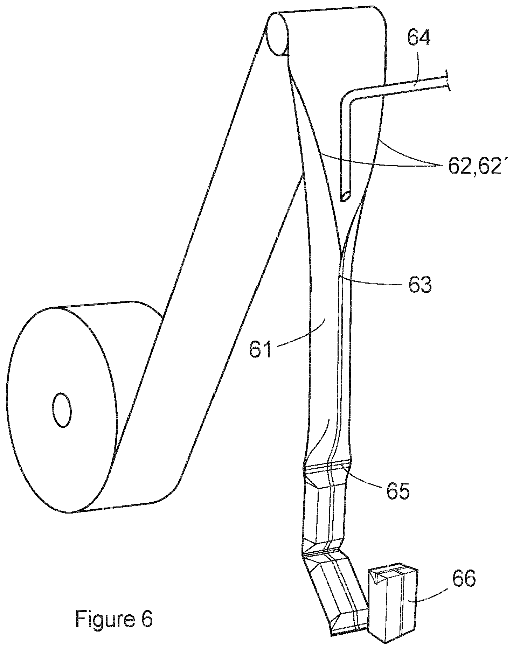

Fig. 6 shows the principle as described in the introduction of the present application, i.e. a web of packaging material is formed into a tube 61 by overlapping the longitudinal edges 62, 62' of the web and heat sealing them to one another, to thus form an overlap joint 63. The tube is continuously filled 64 with the liquid food product to be filled and is divided into individual, filled packages by repeated, double transversal seals 65 of the tube at a pre-determined distance from one another below the level of the filled contents in the tube. The packages 66 are separated by cutting between the double transversal seals (top seal and bottom seal) and are finally shaped into the desired geometric configuration by fold formation along prepared crease lines in the material.

As a final remark, the invention is not limited by the embodiments shown and described above, but may be varied within the scope of the claims.

## Claims

1. Method for manufacturing a barrier-coated paper- or cellulose-based substrate (10a; 10b) for packaging of oxygen-sensitive products, the method comprising the steps of
a) forwarding a web of a paper- or cellulose-based substrate at a line speed of 300 m/min or higher,
the web of the paper- or cellulose-based substrate being selected to have a grammage from 30 to 70 g/m², as measured according to ISO 536:2012, and a density from 800 kg/m³ to 1400 kg/m³, as measured according to ISO 534:2011, the surface of the top side of the paper- or cellulose-based substrate exhibiting a Bendtsen roughness value lower than 130 ml/min, as measured according to ISO 8791:4, and a Cobb 60 below 30 g/m², as measured according to ISO 535,
b) providing an aqueous solution of a gas barrier polymer selected from vinyl alcohol polymers, PVOH, ethylene vinyl alcohol copolymers, EVOH, and modified such PVOH and EVOH polymers, having a solid content from 5 to 15 weight-%, and a viscosity from 10 to 120 mPa*s,
c) applying the aqueous solution of the gas barrier polymer onto the surface of the top side of the web of the paper- or cellulose-based substrate by means of a roll coating method to provide an even coating at an amount from 0.5 to 2 g/m², dry weight,
d) drying the applied aqueous gas barrier polymer coating from step c) while the temperature of the surface of the web substrate is consistently kept from 60 °C to below 95 °C,
e) repeating steps c) and d) at least once,
f) optionally, further coating the dried web substrate, coated with the aqueous solution of the gas barrier polymer as obtained from step e), with a nanometer-thick barrier deposition coating of metal and/ or metal oxide, by means of physical vapour deposition,
thus resulting in a barrier-coated paper- or cellulose-based substrate having a minimum of defects in the gas barrier coatings as well as in the deposition coating of metal and/ or metal oxide.

2. Method as claimed in claim 1, wherein the roll coating method is a rotogravure coating method, such as a reverse rotogravure coating method.

3. Method as claimed in any one of claims 1-2, wherein the aqueous solution of PVOH or EVOH has a solid content from 7 to 13 weight-%, such as from 9 to 13 weight-%, such as from 10 to 12.5 weight-%.

4. Method as claimed in any one of the preceding claims, wherein the aqueous solution of PVOH or EVOH has a viscosity from 50 to 100 mPa*s.

5. Method as claimed in any one of the preceding claims, wherein the surface of the top side of the paper- or cellulose-based substrate exhibits a Bendtsen roughness value lower than 120 ml/min, such as lower than 100 ml/min, such as lower than 80 ml/min, such as lower than 50 ml/min, such as lower than 30 ml/min.

6. Method as claimed in any one of the preceding claims, wherein the surface of the top side of the paper- or cellulose-based substrate exhibits a Bendtsen roughness value lower than than 30 ml/min and Cobb 60 absorption value of 25 g/m² or lower.

7. Method as claimed in any one of the preceding claims, wherein the steps c) and d) are repeated once in step e), and that each coating step applies a coating at an amount from 0.5 to 1 g/m², dry weight.

8. Method as claimed in any one of the preceding claims, wherein in each drying step d) the temperature of the surface of the web substrate is consistently kept at from 65 °C to below 95 °C, such as at from 65 to below 90 °C, such as at from 70 to below 90 °C, such as from 70 to 85 °C, such as from 70 °C to 80 °C.

9. Method as claimed in in any one of the preceding claims, wherein the barrier deposition coating (14) is an aluminium metallisation coating, which is applied to an optical density OD of 1.8 or above, such as from 1.8 to 3.5, such as from 2.0 to 3.0, preferably from 2.1 to 2.6, measured as described herein.

10. Method as claimed in any one of the preceding claims, wherein the surface of the top side of the paper- or cellulose-based substrate further exhibits a Gurley porosity value greater than 1000 s/dl, such as greater than 2000 s/dl, according to Tappi T460 om-2.

11. Method as claimed in any one of the preceding claims, wherein the web of the paper- or cellulose-based substrate has a grammage from 30 to 60 g/m², such as from 35 to 50 g/m², such as from 35 to 45 g/m².

12. Method as claimed in any one of the preceding claims, wherein the barrier polymer is selected from the group consisting of a PVOH of the type having a degree of saponification of at least 98 mol %, such as at least 99 mol %.

13. A laminated packaging material (10a; 10b; 20a; 20b; 20c) comprising the barrier-coated cellulose-based substrate (11-12; 11-12-14; 25a; 25b; 25c) as manufactured by the method claimed in any one of claims 1-12, further comprising a first outermost protective material layer (22a; 22b; 22c) and a second innermost liquid tight, heat sealable material layer (23a; 23b; 23b'; 23c), wherein the thus laminated packaging material has an oxygen transmission value of 0.5 cm³/m², 24h, 0,2 atm oxygen, at 50 % RH, or lower, as measured according to ASTM F1927-14, the oxygen barrier being provided by the barrier-coated paper- or cellulose-based substrate when laminated.

14. A laminated packaging material as claimed in claim 13, wherein the second innermost liquid tight, heat sealable material layer (23a; 23b; 23b'; 23c) comprises a thermoplastic polymer, such as a polyolefin polymer, such as a polyethylene from the lower density range, such as selected from the group consisting of LDPE, LLDPE, m-LLDPE and any blend of two or more thereof.

15. A laminated packaging material as claimed in claim 13, wherein both the first outermost protective material layer (22a; 22b; 22c) and the second innermost liquid tight, heat sealable material layer (23a; 23b; 23b'; 23c) comprises a thermoplastic polymer, such as a polyolefin polymer, such as a polyethylene.

16. Laminated packaging material (20a; 20b; 20c) according to any one of claims 13-15, further comprising a bulk layer (21a; 21b; 21c) of paper or paperboard or other cellulose-based material, and, arranged on the inner side of the bulk layer of paper or paperboard, between the bulk layer and the second innermost liquid tight, heat sealable material layer (23a; 23b; 23b'; 23c), said barrier-coated cellulose-based substrate (10a; 10b; 25a; 25b; 25c).

17. Laminated packaging material (20a; 20b; 20c) according to claim 16, wherein the barrier-coated cellulose-based substrate (10a; 10b; 25a; 25b; 25c) is bonded to the bulk layer (21a; 21b; 21c) by an intermediate bonding layer (26a; 26b; 26c) comprising an adhesive from an aqueous composition comprising a binder selected from the group consisting of acrylic polymers and copolymers, starch, cellulose and polysaccharide derivatives, polymers and copolymers of vinyl acetate and/or vinyl alcohol.

18. Laminated packaging material (20a; 20b; 20c) according to any one of claims 14-17, wherein the second innermost liquid tight, heat sealable polyolefin layer (23a; 23b; 23b'; 23c) is a pre-manufactured polyolefin film, such as a biaxially oriented polyethylene film comprising at least one layer with a majority of an LLDPE polymer, for improved robustness of the mechanical properties of the laminated packaging material.

19. Packaging container (50a; 50b; 50c; 50d) comprising the laminated packaging material as defined in any one of claims 13-18.
